Europäisches Patentamt

European Patent Office

Office européen des brevets

(19)

(11) Numéro de publication : **0 360 698 B1**

# (12) FASCICULE DE BREVET EUROPEEN

(45) Date de publication du fascicule du brevet :
**14.12.94 Bulletin 94/50**

(51) Int. Cl.$^5$ : **G06F 15/70**

(21) Numéro de dépôt : **89402603.8**

(22) Date de dépôt : **22.09.89**

(54) Procédé et dispositif d'estimation de mouvement dans une séquence d'images animées.

(30) Priorité : **23.09.88 FR 8812468**
**09.06.89 FR 8907673**

(43) Date de publication de la demande :
**28.03.90 Bulletin 90/13**

(45) Mention de la délivrance du brevet :
**14.12.94 Bulletin 94/50**

(84) Etats contractants désignés :
**AT BE CH DE ES GB GR IT LI LU NL SE**

(56) Documents cités :
**COMPUTER VISION, GRAPHICS AND IMAGE PROCESSING, vol. 21, no. 2, février 1983, pages 169-204, Academic Press, Inc., New York, US; J. STULLER et al.: "Kalman filter formulation of low-level television image motion estimation"**
**COMPUTER VISION, GRAPHICS AND IMAGE PROCESSING, vol. 21, no. 2, février 1983, pages 262-279, Academic Press, Inc., New York, US; M. YACHIDA: "Determining velocity maps by spatio-temporal neighborhoods from image sequences"**

(73) Titulaire : **THOMSON CONSUMER ELECTRONICS**
**9, Place des Vosges**
**La Défense 5**
**F-92400 Courbevoie (FR)**

(72) Inventeur : **Robert, Philippe**
**THOMSON-CSF**
**SCPI**
**Cédex 67**
**F-92045 Paris la Défense (FR)**
Inventeur : **Pineau, Patrick**
**THOMSON-CSF**
**SCPI**
**Cédex 67**
**F-92045 Paris la Défense (FR)**
Inventeur : **Basset, Pascal**
**THOMSON-CSF**
**SCPI**
**Cédex 67**
**F-92045 Paris la Défense (FR)**

(74) Mandataire : **Lincot, Georges et al**
**THOMSON-CSF,**
**SCPI,**
**B.P. 329,**
**50, rue Jean-Pierre Timbaud**
**F-92402 Courbevoie Cédex (FR)**

EP 0 360 698 B1

## Description

L'invention concerne un procédé et un dispositif d'estimation de mouvement dans une séquence d'images animées.

Elle s'applique notamment à la réalisation de systèmes de télévision numérique et à la réduction du débit des informations circulant dans ces systèmes.

Pour estimer le mouvement ou le déplacement de points animant une séquence d'images, il est connu soit d'effectuer une mise en correspondance des traits caractéristiques de celles-ci, soit d'appliquer une méthode d'estimation différentielle en exploitant les gradients spatiaux et temporels des points représentatifs. Dans ce dernier cas cependant, l'initialisation des algorithmes de gradient employés est difficile à maîtriser. Par exemple, suivant une première méthode, il est connu d'assurer un suivi temporel de quelques points caractéristiques (points anguleux, contours ...) pour estimer leur movement et initialiser un algorithme de gradient, mais dans ce cas, il est impératif avant d'effectuer ce suivi, de résoudre les problèmes d'extraction et de mise en correspondance des points anguleux, ce qui est laborieux et donne des résultats encore très imparfaits.

Il est également connu, suivant une deuxième méthode, de rendre minimal l'écart quadratique des variations locales de luminance inter-image, éventuellement inter-trame, et de procéder à l'initialisation de l'algorithme de gradient par l'estimée du mouvement au point qui précède le point courant sur la même ligne. Dans ce cas, la convergence de l'algorithme dépend en grande partie de la phase d'initialisation employée et celle-ci est généralement faite en ne prenant en compte que les paramètres définis dans le plus proche voisinage spatial causal du point courant. De la sorte, les champs de mouvement pour chaque couple d'images sont calculés de façon indépendante sans tenir compte du fait que ceux-ci sont nécessairement corrélés d'une image à l'autre.

Le but de l'invention est de pallier les inconvénients précités.

A cet effet l'invention a pour objet, un procédé d'estimation de mouvement selon la revendication 1.

L'invention a également pour objet un premier et un deuxième dispositif pour la mise en oeuvre du procédé précité, selon les revendications 7 et 23.

Le procédé et le dispositif selon l'invention ont pour principal avantage qu'ils permettent, grâce à l'utilisation supplémentaire d'un vecteur d'initialisation temporelle, une augmentation de la vitesse de convergence de l'algorithme de gradient. L'estimation de déplacement qui en résulte permet une meilleure interpolation temporelle du fait qu'il y a continuité dans les champs de déplacement. Les risques de fausses estimations qui entraînent des sauts d'images très gênants pour l'oeil se trouvent ainsi limités.

D'autres caractéristiques et avantages de l'invention apparaîtront ci-après à l'aide de la description qui est faite en regard des dessins annexés qui représentent :

- Les figures 1a et 1b deux schémas pour illustrer deux types d'estimation du mouvement mis en oeuvre par l'invention.
- La figure 2 un organigramme pour illustrer le premier type d'estimation de déplacement mis en oeuvre par l'invention.
- La figure 3 une représentation d'une zone d'estimation et d'exploration.
- Les figures 4a, 4b et 4c, trois vues pour illustrer le sens de propagation de l'estimation de déplacement dans une trame et la détermination des valeurs initiales pour les lignes impaires et paires respectivement.
- La figure 5 une vue pour illustrer le mode de calcul du gradient du point courant utilisé selon un premier type d'estimation de déplacement selon l'invention.
- La figure 6 une vue montrant un déplacement dans une image précédant l'image courante.
- La figure 7 une représentation d'une zone d'exploration.
- La figure 8 une organigramme pour illustrer un algorithme de décision mis en oeuvre dans le premier type d'estimation de déplacement selon l'invention.
- La figure 9 une vue éclatée pour illustrer une application du procédé selon l'invention à un mode de fonctionnement inter-trame selon un second type d'estimation de déplacement.
- La figure 10 un organigramme pour illustrer le deuxième type d'estimation de déplacement mis en oeuvre par l'invention.
- La figure 11 une vue pour illustrer un calcul de différence inter-trame déplacée et de gradient de luminance mis en oeuvre dans le deuxième type d'estimation de déplacement selon l'invention.
- La figure 12 une représentation d'une zone où est située l'extrémité du vecteur déplacement pour un point courant (IX, IY, Tj) dans une trame Ta, correspondant au deuxième type d'estimation de déplacement.
- Les figures 13a à 13f des schémas pour illustrer différents types de déplacement entre trames successives Ta et Tb, le mode de définition du champ de prédiction du mouvement entre Tb et Tc pour les deux types d'estimation, et les cas d'apparition de trous et de conflits dans le champ de prédiction au cours de la projection temporelle.

- La figure 14 une vue éclatée montrant un ensemble de trames fictives intercalées dans des trames Ta, Tb, Tc successives, pour illustrer le procédé de prédiction temporelle mis en oeuvre dans le deuxième type d'estimation de déplacement selon l'invention.
- Les figures 15a et 15b deux vues pour illustrer les phases du procédé selon l'invention permettant le traitement des trous en fonction du balayage.
- La figure 16 une vue éclatée de trois trames Ta, Tb et Tc successives pour illustrer le procédé de prédiction temporelle mis en oeuvre dans le premier type d'estimation de déplacement selon l'invention.
- La figure 17 un organigramme pour illustrer les différentes étapes du processus d'élaboration d'une prédiction temporelle selon l'invention.
- La figure 18 les modifications à apporter à l'organigramme de la figure 10 pour permettre une estimation de mouvement à prédiction temporelle.
- La figure 19 une vue éclatée montrant la détermination d'une fenêtre de déplacement à l'intérieur de deux trames encadrant une trame fictive correspondant au deuxième type d'estimation de déplacement selon l'invention.
- La figure 20 les modifications à apporter à l'organigramme de la figure 2 pour permettre une estimation de mouvement à prédiction temporelle correspondant au premier type d'estimation de déplacement.
- La figure 21 les modifications à apporter à l'organigramme de la figure 8 pour permettre une estimation de mouvement à prédiction temporelle.
- Les figures 22 à 27 des modes de réalisation de dispositifs pour la mise en oeuvre du procédé selon l'invention.
- La figure 28 une variante du procédé de calcul de nouveaux déplacements, sous la forme d'un organigramme ;
- La figure 29 une vue pour illustrer une variante de calcul du gradient du point extrémité du vecteur déplacement dans une trame courante ;
- Les figures 30 à 34 des vues pour illustrer deux variantes possibles au traitement des trous en projection temporelle, décrits comme précédemment ;
- La figure 35 un dispositif de filtrage du champ mouvement projeté, avant estimation de mouvement de l'image courante.

Le procédé selon l'invention qui est décrit ci-après repose sur l'utilisation d'un algorithme d'estimation de déplacement du type de celui qui est décrit dans un article de la publication BELL SYSTEM TECHNOLOGIE volume 58 pages 631 à 670 de MARS 1979 Part.1 ayant pour titre "Motion compensated television coding" et pour auteur A.N NETRAVALI et JD. ROBBINS. L'algorithme de gradient qui y est développé rend minimal l'écart quadratique des variations locales de luminance de chaque point courant d'une image de télévision entre le point courant et le point qui lui est homologue dans l'image précédente.

L'expression de cet algorithme est définie par une relation de la forme :

$$- \ D_i(z,t) = D_{i-1}(z,t) - \varepsilon \ .DFD(z,D_{i-1}).\mathrm{grad} \ I(z - D_{i-1},t - T) \quad (1)$$

- où $z(x,y)$ désigne les coordonnées spatiales du point courant $P(z,t)$, en fonction de sa position repérée dans le plan $(x, y)$ de l'image.
- $I(z,t)$ est la luminance du point courant $P(z,t)$ à l'instant t.
- $D_i(z,t)$ est le déplacement estimé au point $P(z,t)$ à l'itération i et $DFD(z,D)$ désigne la différence inter-image déplacée, cette différence vérifiant la relation :

$$DFD(z,D) \ = \ I(z,t) \ - \ I(z - D,t - T) \quad (2)$$

- T désigne la période image, ou la période trame
- $\mathrm{grad} \ I(z,t)$ désigne le vecteur gradient du point courant $P(z,t)$.

et $\varepsilon$ désigne le gain de l'algorithme.

Pour améliorer la vitesse et la précision de convergence de l'algorithme, $\varepsilon$ est défini par la relation :

$$\varepsilon \ = \ 1/2. \left| \mathrm{grad} \ I(z - D_{i-1},t - 1) \right|^2 \quad (3)$$

où

$$\left| \mathrm{grad} \ I(z - D_{i-1},t - 1) \right|^2 = \ \mathrm{grad}^2_x I(z - D_{i-1},t - 1) \ + \ \mathrm{grad}^2_y I(z - D_{i-1},t - 1) \quad (4)$$

avec la condition que si :

$$\left| \mathrm{grad} \ I(z - D_{i-1},t - 1) \right|^2 = 0, \ \mathrm{alors} \ \varepsilon \ = \ 0 \quad (5)$$

La relation (3) fait apparaître que plus le gradient devient grand plus le terme correctif au déplacement estimé à l'itération précédente décroît. Pour estimer le mouvement le procédé selon l'invention utilise les différences inter-trame existantes entre deux trames d'image Ta et Tb dans une séquence d'images, l'unité de temps considérée étant la période image, les trames Ta et Tb étant désignées par la suite par leurs instants de prises de vue.

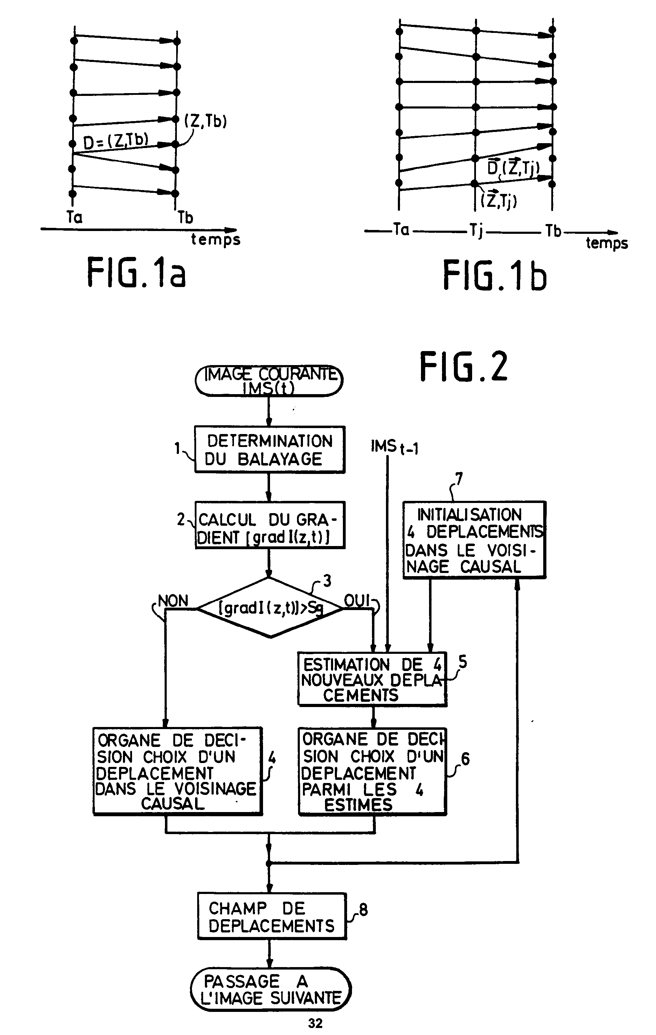

Selon une première variante de réalisation de l'invention, le mouvement est estimé, de la façon représentée à la figure 1a, entre deux trames Ta et Tb à partir des points de Ta et Tb pour les pixels de l'une des deux trames Ta ou Tb (Tb en figure 1a). Le champ de mouvement obtenu est donc attribué à la trame Ta ou à la trame Tb (Tb en figure 1a). Suivant que le mouvement est estimé dans la trame Ta ou dans la trame Tb le vecteur déplacement $D_e$ de chaque pixel de composante de luminance horizontale et verticale IX et IY est défini par des relations de la forme

$$D_e(IX,IY,Ta) = DX, DY$$

ou

$$D_e(IX,IY,Tb) = DX, DY$$

En considérant par exemple que chaque point courant P(z,Tb) se trouve dans la trame Tb, chaque vecteur déplacement $D_e(z,Tb)$ d'un point courant dans la trame Tb a une extrémité pivotante sur un pixel de la trame Tb et une extrémité origine libre dans la trame Ta. Dans ce contexte, si les mouvements des points d'une trame Tj située temporellement entre les trames Ta et Tb doivent être interpolés, les champs des vecteurs déplacement $D_e(z,Tb)$ sont associés aux pixels de la trame Tj, et un calcul d'interpolation permet connaissant $D_e(z,Tb)$ de définir D(z,Tj).

Selon une deuxième variante de réalisation de l'invention, le mouvement est estimé entre les trames Ta et Tb directement pour chaque point de composantes de luminance (IX, IY) d'une trame intermédiaire fictive Tj. En disposant du vecteur déplacement D de chaque pixel de coordonnées (IX, IY, Tj) dans la trame Tj, le procédé d'interpolation fournit alors les valeurs de reconstruction pour chaque point (IX, IY, Tj) de la trame Tj sans nécessiter une étape supplémentaire d'association de mouvement à la trame Tj. Cependant, si plusieurs trames Tj sont interpolées entre les trames Ta et Tb, ce processus devient rapidement très coûteux en temps car il nécessite une estimation du mouvement entre chaque trame Ta et Tb pour chacune des images Tj, il pourrait être alors préférable d'opter en faveur du premier type d'estimation indiqué précédemment. Selon la deuxième variante de réalisation de l'invention le vecteur déplacement D(z,Tj) de chaque pixel P(z,Tj) d'une trame Tj pivote donc autour de son pixel et a ses extrémités portées respectivement sur les trames Ta et Tb, une représentation de cette variante est montrée à la figure 1b.

Cette configuration permet d'exploiter le champ de mouvement obtenu par des estimateurs de mouvement comprenant un interpolateur de trame adapté au mouvement.

Il est à noter que, pour les deux variantes, les trames Ta, Tb et Tj (cette dernière n'existant que dans la deuxième variante) peuvent être indifféremment de parité paire ou impaire ; les trames paires sont simplement décalées verticalement d'une demi-ligne par rapport aux trames impaires (et temporellement d'une demi-période image) : la ligne I de la trame paire se trouve à égale distance des lignes I et I+1 de la trame impaire. Ceci doit être pris en compte lors de la mise en correspondance de deux trames par un adressage adéquat.

Les étapes du procédé correspondant à la première variante de réalisation sont représentées à la figure 2. Selon une première étape représentée en 1 à la figure 2, chaque trame courante IMS(t) (Tb) est analysée point à point en balayant chaque ligne. Le gradient de luminance de chaque point courant de coordonnées z = (x,y) dans le plan de l'image est calculé à l'étape 2, sa valeur absolue est comparée à l'étape 3 à une valeur de seuil déterminée de référence Sg. Si la valeur du gradient trouvé à l'étape 3 est inférieure au seuil Sg, le procédé exécute l'étape 4 qui consiste à choisir un déplacement dans le voisinage causal du point courant P(z,t). Par contre, si à l'étape 3 la valeur du gradient trouvé est supérieure au seuil Sg, le procédé exécute les traitements indiqués à l'étape 5 pour estimer quatre nouveaux déplacements à partir de quatre valeurs initiales de déplacement dans le voisinage causal du point courant. A la fin de l'exécution de l'étape 5 le procédé passe à l'exécution de l'étape 6 et fait le choix d'un déplacement parmi les quatre déplacements qui ont été estimés à l'étape 5. Le procédé se déroule ainsi par itérations successives, chaque fin d'exécution des étapes 4 ou 6 provoquant à l'étape 7 l'initialisation du point suivant et les déplacements sont enregistrés à l'étape 8.

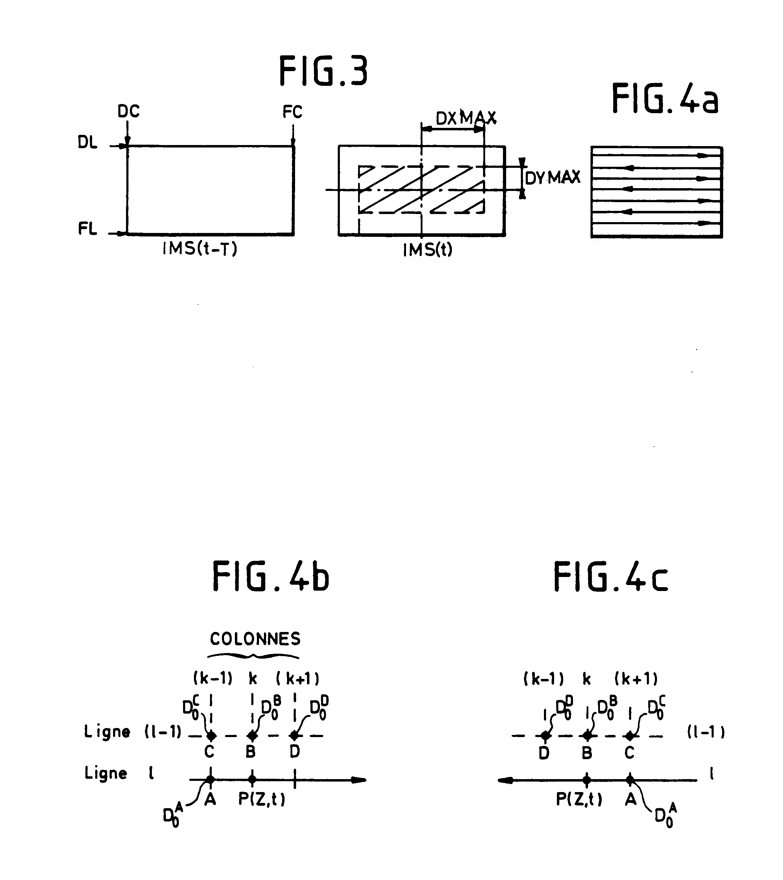

Le déplacement estimé est limité dans l'image en lignes et en colonnes à l'intérieur d'un rectangle de coordonnées $\pm DX_{MAX}$ et $\pm DY_{MAX}$ par rapport au point courant. La zone d'estimation du mouvement dans l'image courante Tb est limitée de la façon représentée à la figure 3, par des valeurs de déplacements maximum DXMAX et DYMAX dans la direction horizontale X et la direction verticale Y de l'image. La recherche du point déplacé se fait dans toute l'image précédente (Ta).

Si un vecteur déplacement est estimé pour tous les pixels de Tb, y compris les bords, un test peut être ajouté pour vérifier que l'extrémité mobile du vecteur est effectivement située sur la trame d'instant Ta. Si ce n'est pas le cas, il est aisé de modifier ce vecteur de façon à avoir pour le pixel courant un nouveau vecteur, le plus proche de l'ancien, qui a son extrémité mobile sur Ta, de façon à pouvoir estimer les fonctions DFD et gradL.

Chaque point de Tb, sauf les points hors de la fenêtre définie précédemment, possède une fenêtre locale de recherche de l'extrémité du vecteur sur Ta, qui est centrée sur le point courant et dont les dimensions horizontale et verticale sont respectivement $2DX_{MAX}$ et $2DY_{MAX}$.

Les déplacements qui sont estimés dans le plus proche voisinage causal du point courant servent à initialiser l'algorithme d'estimation de mouvement. Ce voisinage causal contient quatre déplacements qui sont utilisés pour initialiser quatre estimations de mouvement en parallèle.

La propagation de l'estimation suit dans le procédé le balayage normal des images de télévision. Cependant pour éviter de privilégier un sens de propagation dans l'image de la gauche vers la droite par exemple, le sens de balayage est inversé une ligne sur deux de façon alternée. Une représentation de ce balayage en lignes paires et impaires alternées est représentée à la figure 4a et les valeurs initiales $D_0^A$, $D_0^B$, $D_0^C$ et $D_0^D$ pour les lignes impaires et paires sont représentées respectivement aux figures 4b et 4c.

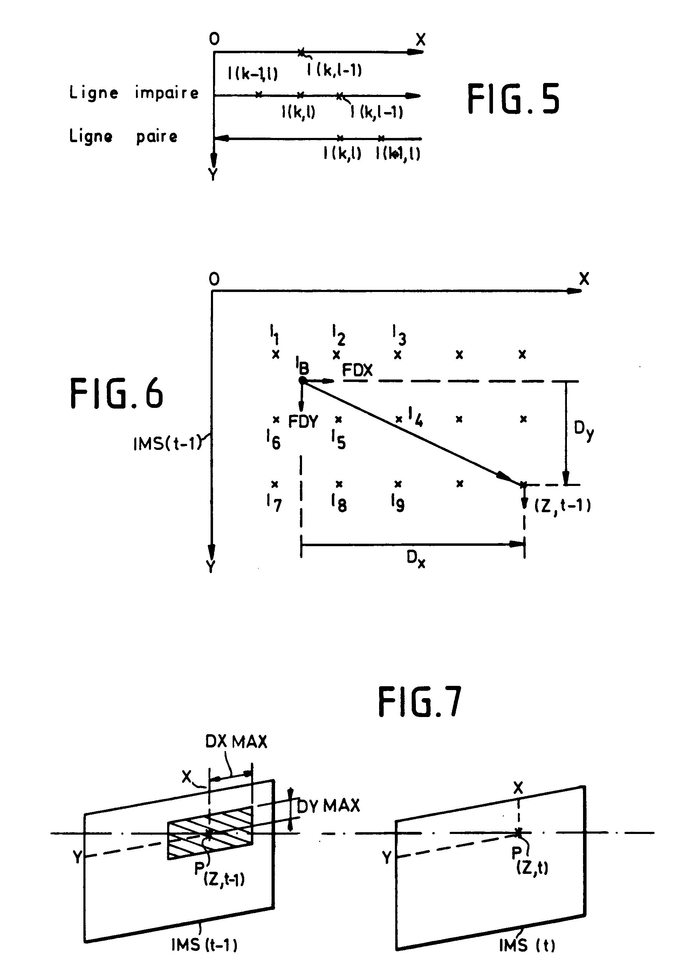

En suivant la représentation de la figure 5, le calcul du gradient dans l'image courante est effectué au point courant $P(z,t)$ suivant le balayage de la ligne courante. Comme ce calcul respecte la causalité il est différent suivant le sens de balayage. Pour une ligne impaire le gradient vérifie la relation :

$$grad_x = I(k,l) - I(k - 1,l); \quad grad_y = I(k,l) - I(k,l - 1) \quad (8)$$

pour une ligne paire le gradient vérifie la relation

$$grad_x = I(k + 1,l) - I(k,l) ; \quad grad_y = I(k,l) - I(k,l - 1) \quad (9)$$

Avec

$$\left| grad\ I(z,t) \right| = (grad^2_x + grad^2_y)^{\frac{1}{2}} \quad (10)$$

Comme l'algorithme de base employé est un algorithme de gradient, aucune itération (nouvelle estimation de déplacement) n'est faite dans les zones à gradients faibles. Le seuil Sg est le seuil employé sur le module du gradient courant.

Pour effectuer l'interpolation et le calcul des gradients dans l'image précédente, chaque déplacement $D=(D_x,D_y)$ est décomposé suivant ses deux composantes $D_x$ et $D_y$ suivant les relations :
$D_x = ID_x + FD_x$ et $D_y = ID_y + FD_y$, où ID et FD désignent respectivement les parties entières et décimales du déplacement.

L'unité du déplacement en X est formée par l'intervalle séparant deux points sur la même ligne et l'unité du déplacement en Y est constituée par l'intervalle séparant deux lignes dans la même trame. Quant aux gradients, ceux-ci sont calculés suivant la méthode connue décrite dans l'article IEEE Trans. on Com., vol. com.32, n°8 d'Août 1984 ayant pour titre "Movement compensated inter-trame prediction for NTSC color TV signals" et ayant pour auteur S. SABRI. Une représentation graphique de ces calculs est montrée à la figure 6 qui représente des déplacements dans l'image précédente IMS(t-1).

La luminance $I_B$ du point courant déplacée dans l'image précédente est obtenue par interpolation bilinéaire des luminances $I_n$ des points voisins, ce qui se traduit avec les notations de la figure 6 par la relation

$$I_B = I_5.(1 - FD_x).(1 - FD_y) + I_6.FD_x.(1 - FD_y) + I_2.(1 - FD_x).FD_y + I_1.FD_x.FD_y \quad (11)$$

Le gradient horizontal est :

$$I_x = (I_5 - I_6 + I_2 - I_1)/2 \quad (12)$$

Le gradient vertical est :

$$I_y = (I_5 - I_2 + I_6 - I_1)/2 \quad (13)$$

Si

$$FD_x = 0 : I_x = (I_4 - I_6 + I_3 - I_1)/4 \quad (14)$$
$$I_y = (I_5 - I_2) \quad (15)$$

Si

$$FD_y = 0 \qquad I_x = (I_5 - I_6) \quad (16)$$
$$I_y = (I_7 - I_1 + I_8 - I_2)/4 \quad (17)$$

Si $FD_x = 0$ et $FD_y = 0$

$$I_x = (I_4 - I_6 + I_3 - I_1)/4 \quad (18)$$
$$I_y = (I_7 - I_1 + I_8 - I_2)/4 \quad (19)$$

Pour limiter les risques de divergence ou d'annulation des termes de correction ceux-ci sont majorés et minorés. On a

$$D_i^x = D_{i-1}^x - (terme\ de\ correction)^x \quad (20)$$
$$D_i^y = D_{i-1}^y - (terme\ de\ correction)^y \quad (21)$$
$$(terme\ de\ correction)^x = DFD(z,D_{i-1}).grad_x\ I(z - D_{i-1},t - 1). \quad (22)$$
$$(terme\ de\ correction)^y = DFD(z,D_{i-1}).grad_y\ I(z - D_{i-1},t - 1). \quad (23)$$

En calculant le gradient dans l'image précédente avec une précision maximale de 0.25 on obtient en vertu de la relation (3)

$$\varepsilon_{MAX} = 8 \quad (24)$$

En général, $FD_x$ et $FD_y$ sont différents de zéro, et la précision maximale sur le gradient est de 0.5. On ob-

tient alors $\varepsilon_{MAX} = 2$.

Suivant un mode possible de réalisation de l'invention des tests de limitation des termes de correction exprimés en unité de déplacement pourront être éventuellement définis de la façon suivante :

1. Si $|(\text{terme de correction})| < 1/16$, alors le (terme de correction) sera pris égal à $\pm 1/16$
2. Si $|(\text{terme de correction})^x| > 3$, alors le (terme de correction)$^x$ sera pris égal à $\pm 3$
3. Si $|(\text{terme de correction})^y| > 2$, alors le (terme de correction)$^y$ sera pris égal à $\pm 2$

Egalement dans ce mode de réalisation on pourra prendre à titre d'exemple comme déplacement maximal en x, $D_{MAX}^x = \pm 15$ et comme déplacement maximal en y, $D_{MAX}^y = \pm 5$.

Si le déplacement estimé dépasse l'une ou l'autre de ces valeurs il est remis à zéro.

Dans ces conditions la zone de recherche dans une trame de l'image IMS(t-1) pour un point courant P(z,t) est définie dans un rectangle de dimension 30x10 comme cela est représenté à la figure 7.

Les quatre estimations de déplacement sont menés en parallèle à partir des 4 valeurs initiales $D_0^A$, $D_0^B$, $D_0^C$ et $D_0^D$. Un point est considéré comme convergent, quand au moins une des 4 valeurs de déplacement $D_i^A$, $D_i^B$, $D_i^C$ et $D_i^D$ donne une valeur absolue de la différence inter-image déplacée DFD(z,$D_i$) inférieure au seuil S défini précédemment pour un numéro d'itération i supérieur ou égal à zéro (i = 0 désignant une valeur initiale) et inférieur ou égal au numéro d'itération maximal $i_{MAX}$ ($0 \leq i \leq i_{MAX}$). Si aucune valeur de déplacement ne donne une valeur $|DFD|$ inférieure ou égale à S, le point est considéré comme divergent, mais il lui est attribué malgré tout un déplacement, celui qui parmi $D_{iMAX}^A$, $D_{iMAX}^B$, $D_{iMAX}^C$, $D_{iMAX}^D$ donne la valeur absolue de DFD la plus faible.

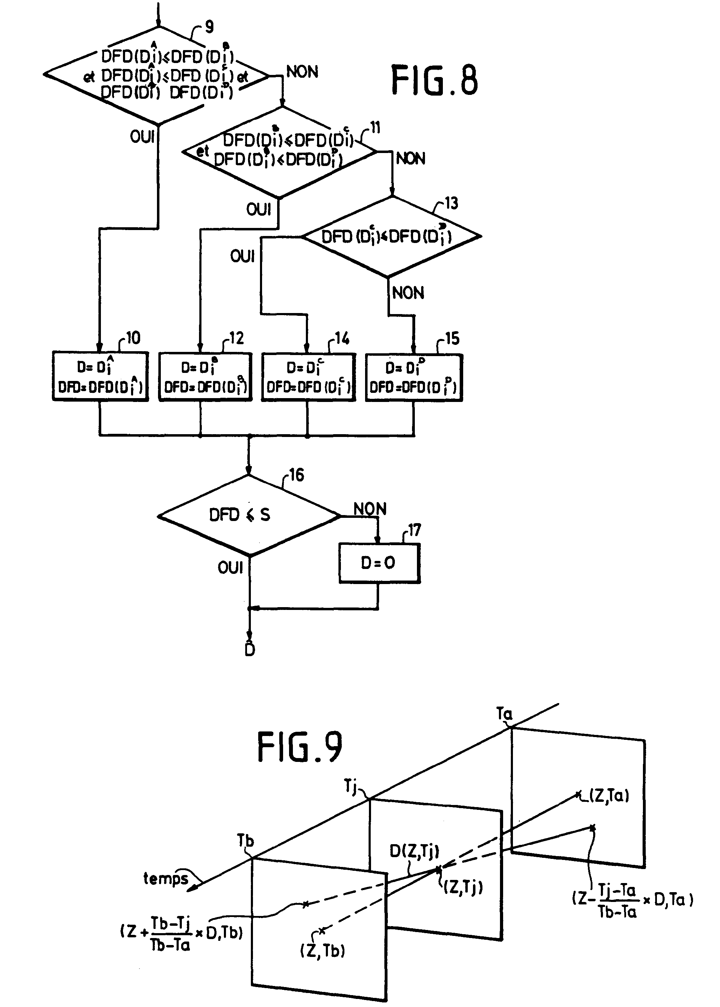

Si le gradient de l'image courante est faible, le choix d'un déplacement se fait dans le voisinage causal du point courant P(z,t) et aucune itération n'est effectuée (i = 0). Le critère de décision consiste alors à choisir le déplacement qui parmi les valeurs $D_0^A$, $D_0^B$, $D_0^C$ et $D_0^D$ donne la valeur absolue de différence inter-image déplacée DFD(z,$D_0$) la plus faible. En cas d'égalité, le choix est effectué dans l'ordre $D_0^A$, $D_0^B$, $D_0^C$ et $D_0^D$ (étapes 9 à 15 de la figure 8). Cependant, si la différence inter-image déplacée des déplacements choisis n'est pas inférieure ou égale au seuil S (étape 16) (seuil de test de convergence) le déplacement prend la valeur 0 (étape 17).

Si le gradient de l'image courante est élevé à chaque itération (de 0 à $i_{MAX}$), on obtient quatre valeurs de $|DFD(D_i)|$ qui sont comparées au seuil S.

Le déplacement retenu est le premier qui donne une $|DFD|$ inférieure ou égale au seuil S. Si plusieurs déplacements sont obtenus à la même itération, celui qui donne la différence inter-image déplacée $|DFD|$ la plus faible est choisi. En cas de nouvelle égalité sur $|DFD|$, un choix arbitraire est effectué dans l'ordre : $D_i^A$, $D_i^B$, $D_i^C$, $D_i^D$.

A chaque itération i ($0 \leq i \leq i_{MAX}$) est associé ainsi un déplacement $D_i$, une différence inter-image déplacée DFD et un nombre d'itération i.

La décision se prend alors sur le nombre d'itérations le plus faible, puis sur la différence inter-image déplacée DFD minimale, pour ensuite faire éventuellement un choix arbitraire.

Selon la deuxième variante de réalisation de l'invention, le procédé permet la détermination d'un champ de mouvement entre deux trames généralement successives d'une séquence d'images, sous la forme d'un champ de vecteurs attribué à une trame fictive située généralement entre les deux trames mères. Le champ de mouvement est composé par un ensemble de vecteurs. Chaque vecteur passe par un pixel de la trame fictive et a ses extrémités sur les deux trames mères qui l'encadrent. Sur la figure 9, les trames mères sont désignées par leur instant de prise de vue Ta et Tb. La trame fictive est située à un instant Tj intermédiaire entre les instants Ta et Tb. Le but est de fournir un vecteur déplacement à chaque pixel de la trame fictive considérée à l'instant Tj, la luminance de chaque pixel étant inconnue a priori, à partir du champ de luminance des trames des instants Ta et Tb. Suivant un autre mode de réalisation de l'invention il sera également possible de considérer que l'instant Tj peut aussi être situé en dehors de l'intervalle (Ta, Tb).

Ce procédé est similaire au procédé décrit précédemment correspondant à la première variante de réalisation de l'invention à la différence cependant qu'il permet d'estimer le mouvement entre deux trames d'instants Ta ou Tb pour les pixels de la trame fictive Tj. Les complexités de l'algorithme et celle du dispositif d'estimation qui en découle, sont du même ordre.

L'estimation de mouvement est calculée à partir de la luminance L() des pixels des trames d'instants Ta et Tb. Le mouvement estimé pour chaque pixel se présente sous la forme d'un vecteur D à deux composantes horizontale DX et verticale DY.

D désigne le déplacement entre Ta et Tb du pixel P de coordonnées (z, Tj) dans la trame fictive Tj. z représente le couple des coordonnées horizontale IX et verticale IY du pixel dans la trame fictive Tj. Dans le cas présent le vecteur déplacement D passe par le point (z, Tj) et a ses extrémités sur les trames Ta et Tb alors que dans le cas précédent le vecteur déplacement D(z, Tb) correspond au déplacement du pixel de coordonnées (z, Tb) entre les trames Ta et Tb. Cette différence a des conséquences sur la définition de l'équation de base (1). Cette équation devient :

$$D_i(z,Tj) = D_{i-1}(z,Tj) - TC \quad (24)$$

avec

$$TC = (DFD(z,Di-1).grad\ L(z,D_{i-1}))/2.(grad\ L(z,D_{i-1}))^2$$

dans laquelle : z est un vecteur qui désigne les coordonnées spatiales du point courant P(z,Tj) pour lequel est estimé le vecteur déplacement D(z,Tj),

$D_i(z,Tj)$ est le vecteur déplacement estimé au point P(z,Tj) à l'itération i,

$DFD(z,D_{i-1})$ désigne la différence temporelle en luminance dans la direction du déplacement $D_{i-1}$, elle est encore appelée "différence inter-trames déplacées" et est calculée entre Ta et Tb suivant la relation :

$$DFD(z,D_{i-1}) = L(B,Tb) - L(A,Ta)$$

avec

$$B = z + ((Tb - Tj)/(Tb - Ta))xD_{i-1}$$
$$A = z - ((Tj - Ta)/(Tb - Ta))xD_{i-1}$$

grad $L(z,D_{i-1})$ est un vecteur qui désigne le gradient spatial de luminance L dans la direction du déplacement $D_{i-1}$. Ce vecteur est égal à la demi-somme des gradients spatiaux aux extrémités de $D_{i-1}$, sur Ta et Tb ; sa valeur est définie par :

$$2\ grad\ L(z,D_{i-1}) = grad\ L(A,Ta) + grad\ L(B,Tb)$$

Comparée à l'équation (1), l'équation (24) ci-dessus est peu différente ; elle diffère cependant dans le calcul des fonctions DFD et grad L, du fait que le vecteur mouvement pivote autour du pixel (z, Tj) et qu'en conséquence ses extrémités sur les trames d'instants Ta et Tb varient, alors que dans le cas précédent, le vecteur pivotait par une extrémité autour du pixel P(z,Tb) et avait son autre extrémité libre sur la trame d'instant Ta. Il en résulte que les avantages conférés par l'estimateur précédent sont conservés. De même, en ce qui concerne le cadre d'utilisation de l'équation de base, les stratégies qui ont encore un sens dans le présent estimateur sont conservées. Il s'agit notamment de :

- l'estimation du vecteur mouvement pour le point courant suivant les récurrences examinées parallèlement calculées à partir de 4 vecteurs d'initialisation qui sont les vecteurs mouvement estimés de 4 points voisins du point courant dans le voisinage causal,
- l'alternance du sens de balayage de la ligne dans la trame courante, trame Tj dans le cadre de la présente invention,
- l'organe de décision à propos du choix d'un déplacement parmi 4 déplacements estimés.

Cependant, la procédure qui consiste à comparer le gradient de la luminance du point courant à un seuil, et à distinguer deux procédures selon que ce gradient est plus grand (strictement) ou plus petit que ce seuil est supprimée. En effet, cette distinction n'a plus de sens du fait que la luminance de la trame courante Tj est inconnue. Tous les points de la trame fictive Tj suivent donc dans ces conditions la même procédure d'estimation du vecteur mouvement, suivant quatre récurrences calculées parallèlement.

D'autre part, l'estimation est calculée entre deux trames Ta et Tb qui peuvent être de même parité ou de parité différente, et pour une trame Tj qui peut être également paire ou impaire. Un vecteur correcteur, désigné par dza ou dzb, est introduit dans le calcul des fonctions DFD et grad L. dza dépend de la parité relative de Ta et Tj, dzb dépend de la parité relative de Tb et Tj.

Les fonctions DFD et grad L deviennent :

$$DFD = L(B + dzb,Tb) - L(A + dza,Ta) \quad (25)$$
$$2xgrad\ L(z,Di-1) = grad\ L(B + dzb,Tb) - grad\ L(A + dza,Ta) \quad (26)$$

Dans le cas où la trame Tj considérée est située en dehors de l'intervalle (Ta, Tb), les différentes équations présentées ci-dessus restent inchangées. Dans ce cas, le support du vecteur D(z,Tj) passe par le point P = (z,Tj) et celui-ci mesure encore le déplacement relatif entre les trames d'instants Ta et Tb.

Pour estimer le mouvement, le procédé utilise les différences inter-trames existantes entre deux trames d'instants Ta et Tb qui se suivent directement ou non dans une séquence d'images. Dans la description qui suit il est supposé que le déplacement de chaque pixel de la trame fictive d'instant Tj est rectiligne entre deux trames d'instants Ta et Tb, et chaque élément d'objet de la trame fictive d'instant Tj (luminance de pixel) est supposé également présent dans les trames d'instants Ta et Tb.

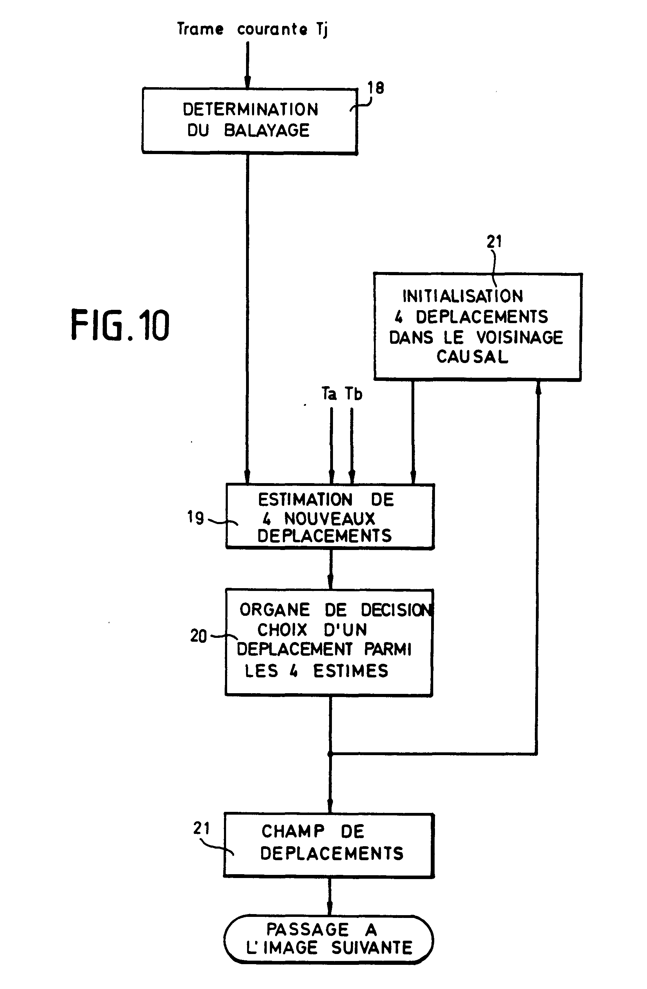

Le procédé se déroule suivant plusieurs étapes qui sont représentées sur l'organigramme de la figure 10. Selon une première étape, représentée en 18, chaque point de la trame courante est analysé, par un balayage en lignes de tous les points de la trame. Le procédé exécute les traitements indiqués à l'étape 19 pour estimer quatre valeurs de déplacements à partir de quatre valeurs initiales de déplacement dans le voisinage causal du point courant. A la fin de l'exécution de l'étape 19, le procédé passe à l'exécution de l'étape 20 et fait le choix d'un déplacement parmi les quatre déplacements qui ont été estimés à l'étape 19. Le procédé se déroule ainsi par itérations successives, chaque fin d'exécution de l'étape 20 provoquant l'initialisation du point suivant (étape 21) et les déplacements sont enregistrés à l'étape 22.

Les déplacements qui sont estimés dans le plus proche voisinage causal du point courant servent à initialiser l'algorithme d'estimation de mouvement. Ce voisinage causal contient quatre déplacements qui sont utilisés pour initialiser quatre estimations de mouvement en parallèle.

Conformément au cas décrit précédemment, le sens de balayage est inversé une ligne sur deux de façon alternée.

Pour effectuer l'interpolation et le calcul des gradients dans la trame précédente, chaque déplacement D = (DX, DY) est décomposé suivant ses deux composantes DX et DY suivant les relations :

DX = IDX + FDX et DY = IDY + FDY où ID et FD désignent respectivement les parties entières et décimales du déplacement.

L'unité du déplacement en X est formée par l'intervalle séparant deux points sur la même ligne et l'unité du déplacement en Y est constituée par l'intervalle séparant deux lignes dans la même trame.

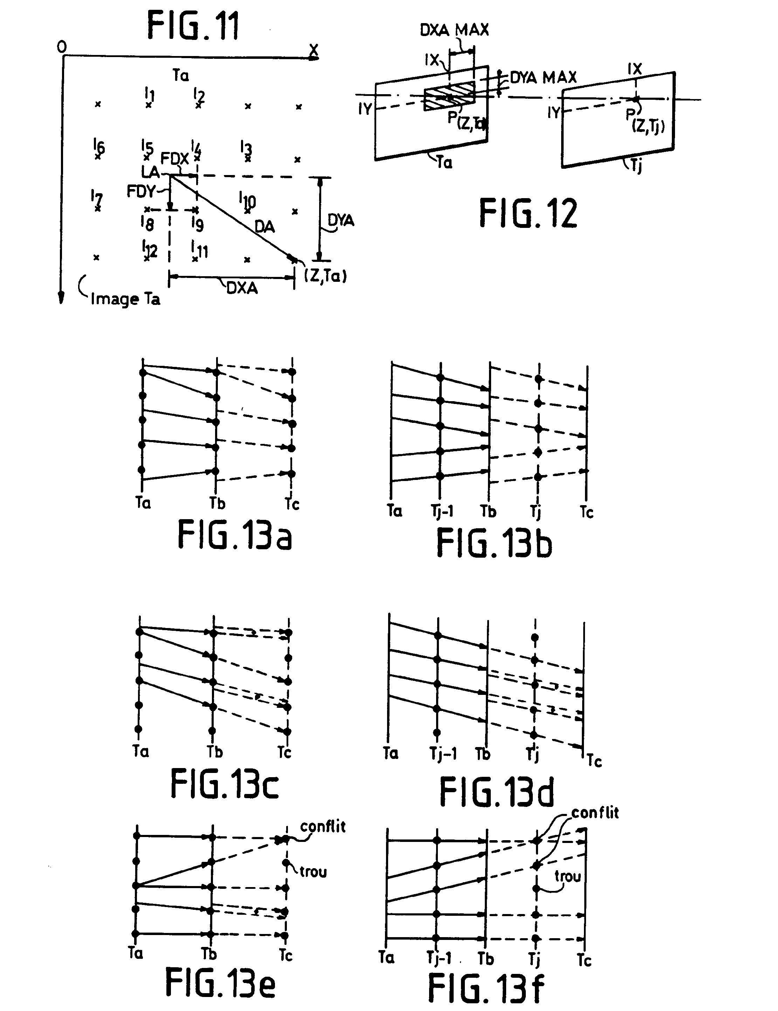

Les gradients sont calculés de la façon décrite ci-dessous, et illustrée par la figure 11 qui représente une portion de la trame d'instant Ta, et un vecteur déplacement dont l'extrémité sur la trame d'instant Ta a pour coordonnées (z-DA,Ta) et a pour luminance LA. La luminance LB de son extrémité dans la trame d'instant Tb, et le vecteur déplacement DB en ce point sont calculés de la même façon.

Dans ce cas les vecteurs déplacements DA et DB vérifient les relations :

$$DA = ((Tj - Ta)/(Tb - Ta)) \times D$$
$$DB = ((Tb - Tj)/(Tb - Ta)) \times D$$

Les vecteurs DA et DB étant colinéaires et tels que D = DA + DB.

La luminance LA du point courant déplacé dans la trame d'instant Ta est obtenue par interpolation bilinéaire des luminances Ln des pixels voisins, ce qui se traduit avec les notations de la figure 11 par la relation :

$$LA = I_9.(1 - FDX).(1 - FDY) + I_8.FDX.(1 - FDY) + I_4(1 - FDX).FDY + I_5.FDX.FDY$$

Le gradient spatial de luminance G en ce point dont les composantes sont notées GX et GY, est calculé de la façon suivante :

Si FDX est inférieure à 0,2 et si FDY est inférieure 0,2 alors

$$GX = (I_{10}-I_8)/2, \quad GY = (I_{11}-I_4)/2$$

ou si FDY est supérieure à 0,8 alors

$$GX = (I_3-I_5)/2$$
$$GY = (I_9-I_2)/2$$

ou est compris entre 0,2 et 0,8 alors

$$GX = (I_{10}-I_8+I_3-I_5)/4$$
$$GY = (I_9-I_4)$$

Si FDX est supérieure à 0,8 et si FDY est inférieure à 0,2 alors

$$GX = (I_9-I_7)/2$$
$$GY = (I_{12}-I_5)/2$$

ou si FDY est supérieure à 0,8 alors

$$GX = (I_4-I_6)/2$$
$$GY = (I_8-I_1)/2$$

ou si FDY est compris entre 0,2 et 0,8 alors

$$GX = (I_9-I_7+I_4-I_6)/4$$
$$GY = (I_8-I_5)$$

enfin si FDX est compris entre 0,2 et 0,8 et si FDY est inférieure à 0,2 alors

$$GX = (I_9-I_8)$$
$$GY = (I_{11}-I_4+I_{12}-I_5)/4$$

ou si FDY est supérieure à 0,8 alors

$$GX = (I_4-I_5)$$
$$GY = (I_9-I_2-I_8-I_1)/4$$

ou si FDY est compris entre 0,2 et 0,8 alors

$$GX = (I_4-I_5+I_9-I_8)/2$$
$$GY = (I_9-I_4+I_8-I_5)/2$$

Une fois déterminées les luminances LA et LB des extrémités du vecteur D sur les trames d'instants Ta et Tb, la différence inter-trames déplacées est calculée par la relation :

$$DFD(z,D) = LB - LA$$

De même une fois que les gradients spatiaux GA et GB sont déterminés aux extrémités du vecteur D sur les trames Ta et Tb, le gradient grad L(z,D) de l'équation récursive (24) est calculée par la relation :

$$2 \times grad\ L(z,D) = GA + GB.$$

Comme dans le cas précédent les risques de divergence ou d'annulation des termes de correction peuvent être limités en majorant et en minorant ces derniers, de sorte que,

$$D_i^x = D_{i-1}^x - \text{(terme de correction en x)}$$

$$D_i^y = D_{i-1}^y - \text{(terme de correction en Y)}$$

avec (terme de correction en X)=DFD(z,D$_{i-1}$)xgrad$_x$(z,D$_{i-1}$)x ε et (terme de correction en Y)=DFD(z,D$_{i-1}$)xgrad$_y$(z,D$_{i-1}$)x ε avec ε = 1/2x $|$ grad L(z,D$_{i-1}$) $|^2$ et

$$| \text{grad } L(z,D_{i-1}) |^2 = \text{grad}_x^2 L(z,D_{i-1}) + \text{grad}_y^2 L(z,D_{i-1}) \quad (5)$$

avec la condition que si (grad L(z,D$_{i-1}$))$^2$=0
alors ε a pour valeur zéro.

Comme dans le cas précédent des tests de limitation des termes de correction exprimés en unité de déplacement peuvent être définis de la façon suivante :

1. Si la valeur absolue de (terme de correction) est inférieure à 1/16, alors le (terme de correction) sera pris égal à ±1/16.

2. Si la valeur absolue de (terme de correction en x) est supérieure à 3, alors le (terme de correction en x) sera pris égal à ±3.

3. Si la valeur absolue de (terme de correction en y) est supérieure à 2, alors le (terme de correction en y) sera pris égal à ±2.

On pourra également prendre à titre d'exemple, dans le cas de 2 trames successives, un déplacement maximal en x :

DXMAX = ±8 colonnes, et un déplacement maximal en y :

DYMAX = ±4 lignes.

Si le déplacement estimé dépasse l'une ou l'autre de ces valeurs, il est remis à zéro.

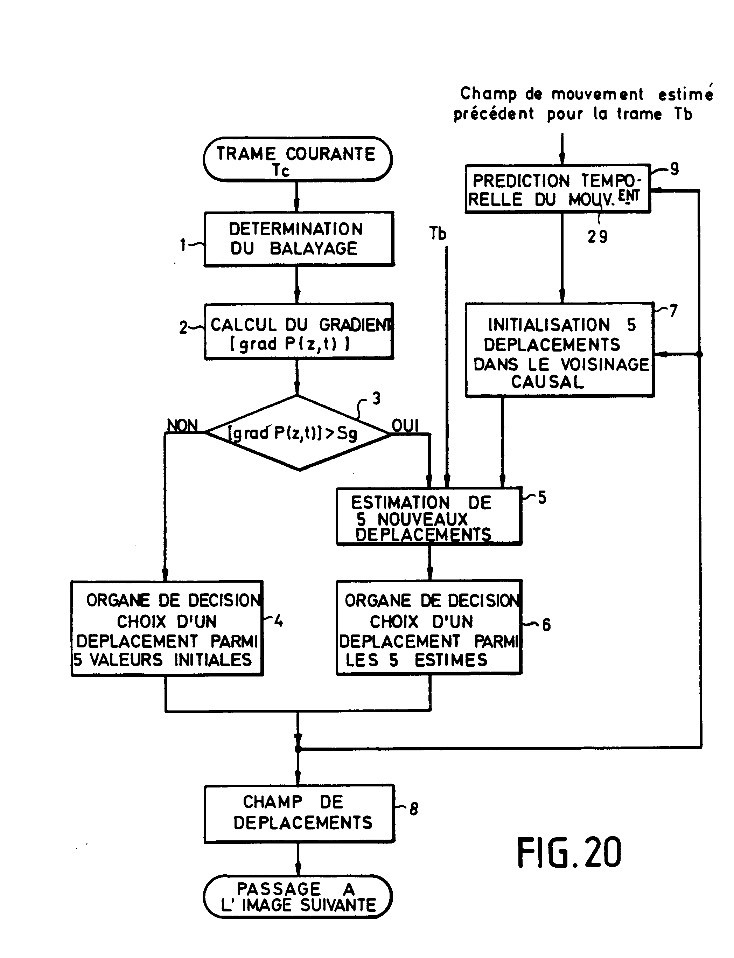

Le déplacement maximal DMAX entre les trames d'instants Ta et Tb peut être décomposé en DA MAX et DB MAX vecteurs colinéaires dont les extrémités sont respectivement sur les trames d'instants Ta et Tj pour DA MAX, les trames d'instants Tb et Tj pour DB MAX, tels que DMAX = DA MAX + DB MAX. DMAX étant fixé, DA MAX et DB MAX dépendent de la distance de la trame d'instant Tj aux trames d'instants Ta et Tb. La zone de recherche dans les trames d'instants Ta et Tb pour un point courant P(z,Tj) est alors définie par un rectangle sur chaque trame Ta et Tb comme cela est figuré aux figures 12 et 19 de dimensions respectives :

$$2DA \text{ MAX} = 2 \times (DX \text{ MAX} \times ((Tj - Ta)/(Tb - Ta)), DY \text{ MAX} \times ((Tj - Ta)/(Tb - Ta)))$$

et

$$2DB \text{ MAX} = 2 \times DX \text{ MAX} \times ((Tb - Tj)/(Tb - Ta)), DY \text{ MAX} \times ((Tb - Tj)/(Tb - Ta)))$$

Si un vecteur déplacement est estimé pour tous les pixels de la trame fictive Tj, y compris les bords, un test peut être ajouté pour vérifier que les extrémités du vecteur sont effectivement situés sur les trames d'instants Ta et Tb. Si ce n'est pas le cas, il est aisé de modifier ce vecteur de façon à avoir pour le pixel courant un nouveau vecteur, le plus proche de l'ancien, qui a ses extrémités sur les trames d'instants Ta et Tb, de façon à pouvoir estimer les fonctions DFD et grad L.

Conformément au cas précédent, les quatre estimations de déplacement sont menées en parallèle à partir de 4 valeurs initiales D$_0^A$, D$_0^B$, D$_0^C$ et D$_0^D$. Un point est considéré comme convergent, quand au moins une des 4 valeurs de déplacement D$_i^A$, D$_i^B$, D$_i^C$, et D$_i^D$ donne une valeur absolue de la différence inter-trames déplacée DFD(z,Di) inférieure à un seuil S prédéfini, pour un numéro d'itération i supérieur ou égal à zéro (i = 0 désignant une valeur initiale) et inférieur ou égal au numéro d'itération maximal i MAX. Si aucune valeur de déplacement ne donne une valeur DFD inférieure ou égale à S, le point est considéré comme divergent, mais il lui est attribué malgré tout un déplacement, celui qui parmi D$_{iMAX}^A$, D$_{iMAX}^B$, D$_{iMAX}^C$, D$_{iMAX}^D$ donne la valeur absolue de la différence inter-image déplacée DFD la plus faible.

A chaque itération (de 0 à i MAX), le procédé donne quatre valeurs de DFD(D$_i$) qui sont comparées au seuil S.

Le déplacement retenu est le premier qui donne la valeur DFD inférieure ou égale au seuil S. Si plusieurs déplacements possèdent une valeur DFD inférieure ou égale à S à la même itération, celui qui donne la différence inter-trames déplacées DFD la plus faible est choisi. En cas de nouvelle égalité sur la valeur de DFD, un choix arbitraire est effectué dans l'ordre : D$_i^A$, D$_i^B$, D$_i^C$, D$_i^D$.

A chaque itération i depuis la valeur i = 0 jusqu'à une valeur i$_{MAX}$ sont associés ainsi un déplacement D$_i$, une différence inter-trames déplacées DFD et un nombre d'itération i.

La décision est prise sur le nombre d'itérations le plus faible, puis sur la différence inter-trames déplacées DFD minimale, puis ensuite selon éventuellement un choix arbitraire.

Pour tenir compte du fait que les champs de mouvement sont nécessairement corrélés d'une image à l'autre, les procédés décrits précédemment doivent être modifiés dans leur phase d'initialisation pour introduire un vecteur déplacement temporel supplémentaire ; la difficulté étant, pour propager temporellement d'estimation, de trouver dans le champ de mouvement estimé précédent, le déplacement qui convient le mieux au point courant où est appliqué l'algorithme d'estimation de déplacement.

Selon une première méthode, il est possible d'utiliser comme valeur initiale, le déplacement du point de mêmes coordonnées spatiales dans le champ de mouvement estimé précédent, comme cela est représenté aux figures 13a et 13b. Cependant cette méthode n'est valable que si les déplacements d'une image à l'autre sont petits et il ne faudrait pas par exemple attribuer au point courant une valeur initiale fausse, ce qui aurait pour conséquence d'introduire des imprécisions supplémentaires dans l'estimation de mouvement.

Dans le cas où, selon une deuxième méthode, les images présentent de grands déplacements, il est nécessaire d'effectuer une prédiction temporelle du champ de mouvement courant à partir du champ de mouvement précédent, dans la direction du déplacement comme cela est figuré aux figures 13c et 13d. Cette prédiction temporelle sert ensuite à l'initialisation de l'estimation du déplacement.

La première méthode présente peu d'intérêt dans la mesure où elle peut introduire des imprécisions. Par contre, la valeur initiale temporelle est obtenue très facilement : il suffit de lire le mouvement attribué au point de mêmes coordonnées spatiales dans une mémoire de mouvement de l'image précédente.

La seconde méthode est plus performante : les déplacements estimés entre les trames Ta et Tb pour les points d'une trame fictive Tj-1 ou pour les points de la trame Ta ou de la trame Tb sont projetés suivant leur direction vers la trame suivante, dont on veut estimer le mouvement respectivement vers la trame Tj ou vers la trame Tb ou Tc, pour former l'image de prédiction. On obtient ainsi le champ de mouvement initial de prédiction temporelle servant à l'estimation de déplacement entre Tc et Tb pour les points de la trame Tj ou pour les points de la trame Tb ou de la trame Tc.

Ainsi, si Tx désigne indifféremment la trame (Tj, Tb ou Tc) sur laquelle est appliqué l'algorithme d'estimation de mouvement, la trame Tx-1 précédente contient par hypothèse un champ de mouvement défini par des vecteurs mouvements à deux composantes (DX et DY) en chacun de ses points. Le champ de mouvement est défini dans ces conditions pour tous les points de la trame Tx s'il existe en chaque point de la trame Tx un point correspondant dans la trame Tx-1. Le cas idéal est une bijection des points de la trame Tx-1 vers ceux de la trame Tx, chaque point de la trame Tx possédant dans ce cas un et seul correspondant dans la trame Tx-1.

Cependant en pratique cette configuration ne se rencontre pratiquement jamais, conformément aux figures 13e et 13f soit qu'il manque des correspondants, et il existe alors des trous dans le champ de prédiction, soit qu'il existe plusieurs correspondants, et des conflits apparaissent dans le champ de prédiction.

Ces difficultés sont surmontées par l'invention de la façon suivante.

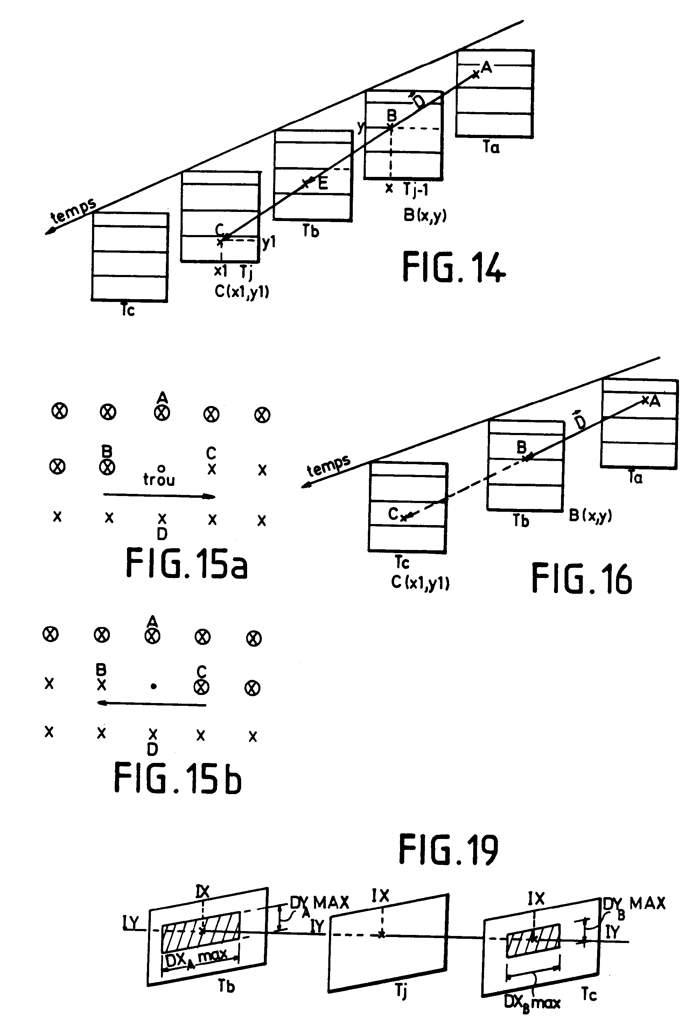

Dans le cas où les déplacements sont estimés entre les trames Ta et Tb pour les points d'une trame fictive Tj-1 située entre Ta et Tb, le procédé selon l'invention consiste à définir pour chaque point de la trame fictive Tj suivante comprise entre la trame Tb et la trame suivante Tc une prédiction du vecteur mouvement à partir du champ de la trame fictive Tj-1 ; ce champ de mouvement étant défini par les vecteurs déplacement D = (DX,DY) de chaque point de la trame Tj-1. Pour cela comme le représente la figure 14 il est supposé que le mouvement entre les trames Tj-1 et Tj est linéaire, et chaque vecteur déplacement de la trame Tj-1 est prolongé jusqu'à la trame Tj où il crée un point d'intersection. Il y a ainsi autant de points d'intersection qu'il y a de pixels dans la trame Tj-1, certains pouvant être éventuellement confondus. Chacun de ces points d'intersection est de la sorte associé au vecteur mouvement qui l'a créé, et de ce fait chaque point d'intersection est porteur d'une information renseignant sur le mouvement des points de la trame Tj.

Le problème devient alors celui de définir quelle est la prédiction de mouvement à donner aux pixels de la trame Tj à partir des vecteurs déplacement des points d'intersection situés également sur la trame Tj.

A titre d'exemple, en considérant sur la figure 14 le champ de mouvement entre les trames Ta et Tb pour les points de la trame Tj-1, en appelant D=(DX,DY) le vecteur déplacement d'un point B situé sur cette trame, et en faisant l'hypothèse que le mouvement a lieu linéairement entre la trame Ta et la trame Tj, il est possible de considérer que le mouvement du point B peut être attribué au point C, point d'intersection du vecteur déplacement du point B dans la trame Tj.

Si le point B a pour coordonnées spatiales $(X,Y)$, le point d'impact C a pour coordonnées spatiales

$$(X_1\, Y_1) \;=\; [X + \frac{Tj - Tj - 1}{Tb - Ta} \times DX\; ;$$

$$Y + \frac{Tj + Tj - 1}{Tb - Ta} \times DY]$$

Cependant, comme au point d'intersection C ne correspond généralement pas un pixel de la trame Tj car les déplacements dans la trame ne sont généralement pas entiers et que le but est d'attribuer un vecteur de prédiction à chaque pixel $P(X_p\, Y_p)$ de la trame Tj, il est attribué au pixel de coordonnées les plus proches de celle du point d'intersection C le vecteur déplacement du point C, comme cela peut être perçu sur les exemples représentés aux figures 13c et 13d. Le vecteur déplacement $D_0^p(P,Tj)$ qui est attribué au point P est dans ces conditions égale au vecteur déplacement D(B,Tj-1) du point B dans la trame Tj-1.

Pour le traitement des conflits, lorsque par exemple plusieurs quadruplets (X, Y, DX, DY) de la trame Tj-1 aboutissent à un même point de coordonnées $(X_p, Y_p)$ dans la trame Tj la solution qui est adoptée consiste à calculer la différence temporelle dans la direction du mouvement entre les trames Tc et Tb par vecteur déplacement reçu en ne retenant comme prédiction temporelle que le déplacement qui donne la différence DFD la plus petite. Eventuellement d'autres solutions peuvent encore être envisagées. Une deuxième solution peut par exemple consister à n'envisager de ne garder que le premier mouvement qui se présente : c'est-à-dire que lorsqu'un point de la trame Tj a reçu un mouvement, il ne pourra plus en recevoir d'autres. Cependant cette solution parait assez critique dans la mesure où il n'est pas possible de juger si le premier mouvement qui est attribué au point convient comme valeur initiale.

De plus, cette solution nécessite d'effectuer un test en chaque point pour savoir si un mouvement a été ou non attribué en ce point.

Selon encore une troisième solution il est encore possible d'envisager plus simplement de ne garder que le dernier mouvement qui se présente. Cependant un problème similaire à celui mentionné dans la deuxième solution subsiste. Dans le cas d'un mouvement où objet et fond se déplacent comme dans la deuxième solution en sens opposés, cette troisième solution donnera de bons résultats mais des mouvements de l'objet relativement au fond sont inversés il y a encore passage de l'objet derrière le fond.

Le traitement des trous a lieu de la manière suivante : Comme indiqué précédemment il peut arriver que certains pixels de la trame Tj ne se voient attribuer aucun mouvement (figure 13f). Ces trous dans le champ en mouvement de prédiction sont comblés par interpolation spatiale des vecteurs mouvement du plus proche voisinage. Pour ce faire, lorsque le procédé a associé aux pixels les plus proches des points d'impact les mouvements correspondants, il recherche les trous dans le champ de prédiction de la trame Tj ainsi obtenu, en alternant le sens de balayage horizontal une ligne sur deux.

Lorsqu'il est en présence d'un trou quatre points du voisinage sont alors considérés comme cela est représenté aux figures 15a et 15b. Dans les configurations représentées aux figures 15a et 15b on suppose que les points du voisinage causal (A d'une part, B ou C selon le sens de balayage horizontal d'autre part) ont déjà été traités, et qu'ils possèdent un vecteur mouvement. Cependant, selon le sens du balayage les points C ou B et le point D peuvent ne pas posséder de vecteur mouvement et être aussi des trous. Dans ce cas, ils ne sont pas pris en compte pour l'interpolation. Dans ces cas le procédé attribue au trou le mouvement issu de la moyenne des vecteurs mouvement des points du voisinage spatial. Ce calcul se fait au mieux avec quatre vecteurs mouvement (points A, B, C et D) au pire avec deux vecteurs mouvement (points A, et B ou C selon le balayage, C ou B et D étant aussi des trous).

Le processus de prédiction temporelle pour des estimateurs de déplacement entre trames Tc et Tb pour des points appartenant à une trame Tc ou Tb est similaire.

En considérant, par exemple, comme ceci est représenté à la figure 16, le champ de mouvement entre les trames Ta et Tb calculé pour les points de la trame Tb et en faisant l'hypothèse d'un mouvement linéaire, le mouvement du pixel B de coordonnées spatiales (X,Y) dans la trame Tb peut être attribué à un point C de la trame Tc, de coordonnées spatiales (X1,Y1) qui est le point d'impact sur cette trame du vecteur mouvement attribué au point B. Dans ce cas les coordonnées (X1, Y1) vérifient la relation :

$$(X1,Y1) = (X + DX, Y + DY + DEY)$$

où DX, DY désignent les composantes du vecteur déplacement D du point B dans la trame Tb et DEY désigne le décalage vertical éventuel entre les trames Tb et Tc (si trames de parités différentes).

Comme le point C ne correspond généralement pas à un pixel, c'est le pixel le plus proche du point C qui se voit attribuer le vecteur mouvement du point C : En appelant P(XP,YP) le pixel le plus proche du point C, on obtient ainsi la relation

$$D_0^P(P,Tc) = D(B,Tb).$$

Les conflits et les trous du champ de prédiction sont traités de la même façon que précédemment.

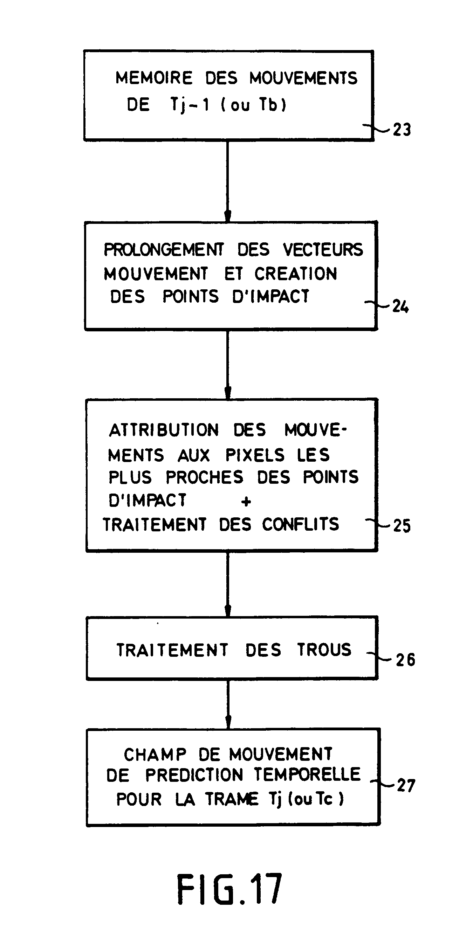

Les différentes étapes du processus de prédiction temporelle sont résumées sur l'organigramme de la figure 17. Une première étape 23 consiste à mémoriser les vecteurs déplacement des points de chaque trame Tj-1 ou Tb pour prolonger à l'étape 24 les vecteurs déplacements afin de déterminer leurs points d'impact sur les trames Tj ou Tc. A l'étape 25 les vecteurs déplacements sont attribués aux pixels les plus proches des points d'impact et les conflits entre vecteurs arrivant aux mêmes points d'impact sont réglés. Le traitement des trous a lieu à l'étape 26 et la mémorisation des champs de mouvement pour les trames Tj ou Tc est réalisée à l'étape 27.

Pour obtenir une très bonne prédiction, il faut ajouter à la prédiction temporelle des champs de mouvement obtenus à l'étape 27 les prédictions obtenues précédemment dans le voisinage spatial causal du point courant.

Ceci conduit de par les exemples décrits précédemment à fixer à cinq le nombre des déplacements initiaux, quatre sont choisis dans le plus proche voisinage causal (récursion spatiale) et un est choisi par la méthode de prédiction temporelle décrite précédemment.

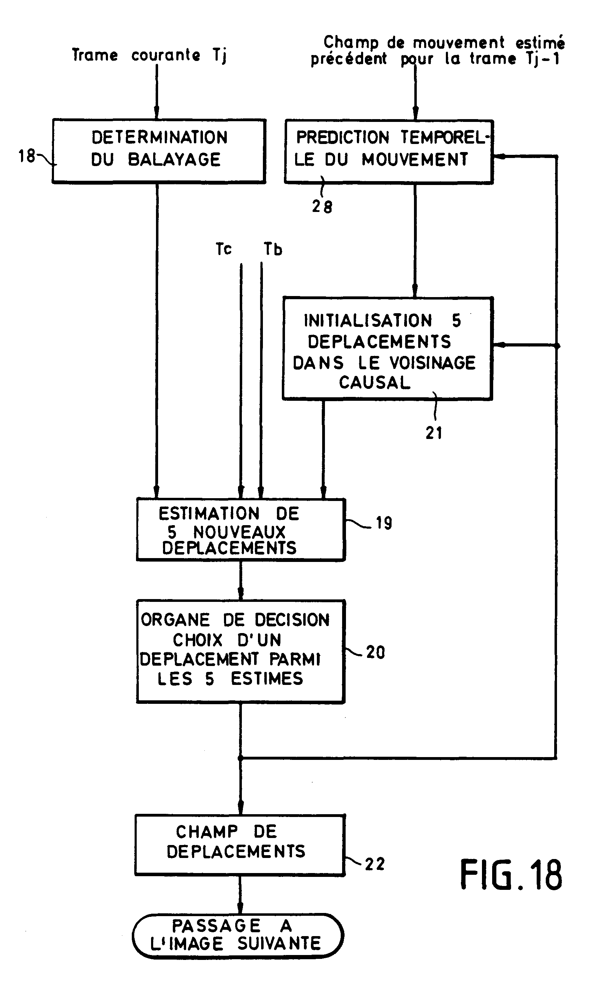

Dans ces conditions les procédés décrits par les organigrammes des figures 2 et 10 doivent être modifiés selon les figures 20 et 18 respectivement pour introduire dans chaque phase d'initialisation le paramètre de prédiction temporelle.

Selon une première étape représentée en 18 sur la figure 18, chaque point de la trame courante est considéré en balayant chaque ligne de cette trame. Le procédé exécute les traitements indiqués à l'étape 19 pour estimer 5 nouveaux déplacements à partir de quatre valeurs initiales de déplacement déterminées dans le voisinage causal du point courant, et à partir d'une valeur initiale de prédiction temporelle définie à l'étape 28. A la fin de l'exécution de l'étape 19, le procédé passe à l'exécution de l'étape 20 et fait le choix d'un déplacement parmi les 5 déplacements qui ont été estimés à l'étape 19. Le procédé se déroule ainsi par itérations successives, chaque fin d'exécution de l'étape 20 provoquant l'initialisation du point suivant et les déplacements sont enregistrés à l'étape 22.

Les cinq estimations de déplacement sont menées en parallèle à partir des 4 valeurs initiales spatiales $D_0^A$, $D_0^B$, $D_0^C$, $D_0^D$ et de la valeur initiale $D_0^P$. Un point est considéré comme convergent, quand au moins une des cinq valeurs de déplacement $D_i^A$, $D_i^B$, $D_i^C$, $D_i^D$ et $D_i^P$ donne une valeur absolue de la différence inter-trames déplacée DFD$(z,D_i)$ inférieure au seuil S défini précédemment pour un numéro d'itération i supérieur ou égal à zéro (i=0 désignant une valeur initiale) et inférieur ou égal au numéro d'itération maximal $i_{MAX}(0 \leqq i \leqq i_{MAX})$. Si aucune valeur de déplacement ne donne une valeur $|DFD|$ inférieure ou égale à S, le point est considéré comme divergent mais il lui est attribué malgré tout un déplacement, celui qui parmi $D_{iMAX}^A$, $D_{iMAX}^B$, $D_{iMAX}^C$, $D_{iMAX}^D$, $D_{iMAX}^P$ donne la valeur absolue de DFD la plus faible.

A chaque itération (de 0 à $i_{MAX}$), on obtient ainsi cinq valeurs de $|DFD(D_i)|$ qui sont comparées au seuil S.

Le déplacement retenu est le premier qui donne une $|DFD|$ inférieure ou égale au seuil S. Si plusieurs déplacements sont obtenus à la même itération, celui qui donne la différence inter-image déplacée $|DFD|$ la plus faible est choisi. En cas de nouvelle égalité sur $|DFD|$, un choix arbitraire est effectué dans l'ordre : $D_i^P$, $D_i^A$, $D_i^B$, $D_i^C$, $D_i^D$. A chaque itération $i(0 \leqq i \leqq i_{MAX})$ est associé ainsi un déplacement $D_i$, une différence inter-trames déplacées DFD et un nombre d'itération i.

La décision se prend alors sur le nombre d'itérations le plus faible, puis sur la différence inter-image déplacée DFD minimale pour ensuite faire éventuellement un choix arbitraire.

De manière similaire au procédé décrit à l'aide de l'organigramme de la figure 2, chaque point d'une trame courante Tc est considéré sur l'organigramme de la figure 20 en balayant chaque ligne de cette trame.

Le module du gradient au point courant $|grad\ P(z,t)|$ est calculé à l'étape 2.

Un test sur ce module du gradient au point courant est effectué à l'étape 3.

. Si $|grad\ P(z,t)|$ est faible, le choix d'un déplacement pour le point courant se fait à l'aide de l'organe de décision 4. Cinq valeurs initiales sont considérées : 4 dans le voisinage spatial causal et une valeur initiale de prédiction temporelle. Aucun calcul de terme de correction n'est effectué. Puis passage à l'étape 8.

. Si $|grad\ P(z,t)|$ est élevé, 5 nouveaux déplacements sont estimés en parallèle à l'étape 5 à partir des 5 valeurs initiales (4 spatiales + 1 temporelle). L'étape 6, consiste à choisir un déplacement parmi les 5 déplacements qui ont été estimés à l'étape 5. Chaque fin d'exécution de l'étape 4 ou 6 provoque l'initialisation du point suivant (étapes 7 et 9) et les déplacements sont enregistrés à l'étape 8.

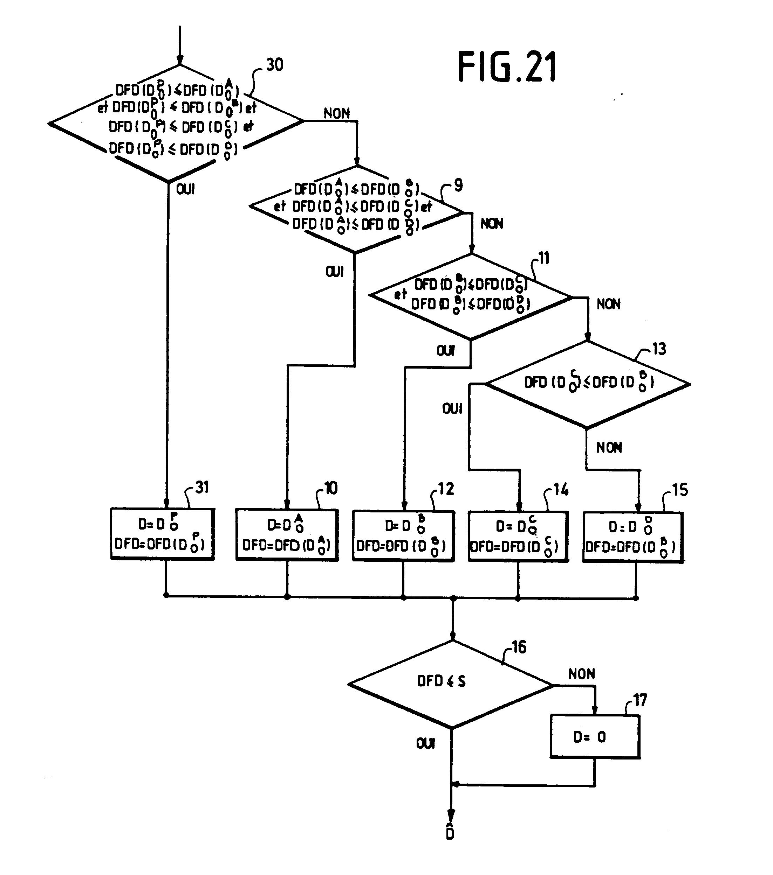

Lorsque le gradient de l'image est faible, le choix d'un déplacement se fait de la manière représentée à la figure 21 parmi cinq valeurs initiales, le choix des quatre valeurs de déplacement spatiales s'effectuant selon des étapes 9 à 17 identiques à celles représentées à la figure 8 et le choix de la valeur de déplacement temporelle s'effectuant par l'exécution des étapes 30 et 31. Comme précédemment le déplacement retenu est celui qui parmi les déplacements $D_0^P$, $D_0^A$, $D_0^B$, $D_0^C$ et $D_0^D$ donne la différence inter-image déplacée la plus faible. En cas d'égalité, le choix est effectué dans l'ordre $D_0^P$, $D_0^A$, $D_0^B$, $D_0^C$ et $D_0^D$. Cependant, si la différence inter-image déplacée n'est pas inférieure ou égale au seuil S de convergence, le déplacement choisi est remis à zéro.

Lorsque le gradient de l'image courant est élevé les cinq estimations de déplacement sont menées en parallèle à partir des quatre valeurs initiales spatiales $D_0^A$, $D_0^B$, $D_0^C$, $D_0^D$ et de la valeur initiale temporelle $D_0^P$. Un point est considéré comme convergent, quand au moins une des cinq valeurs de déplacements $D_i^A$, $D_i^B$, $D_i^C$, $D_i^D$, $D_i^P$ donne une valeur absolue de la différence inter-trames déplacée DFD$(z,D_i)$ inférieure au seuil S défini précédemment pour un numéro d'itération i supérieur ou égal à zéro (i = 0 désignant une valeur initiale) et inférieur ou égal au numéro d'itération maximal $i_{MAX}(0 \leqq i \leqq i_{MAX})$. Si aucune valeur de déplacement ne donne une valeur $|DFD|$ inférieure ou égale à S le point est considéré comme divergent, mais il lui est attribué malgré tout un déplacement, celui qui parmi $D_{iMAX}^A$, $D_{iMAX}^B$, $D_{iMAX}^C$, $D_{iMAX}^D$, $D_{iMAX}^P$, donne la valeur absolue de DFD la plus faible.

A chaque itération (de 0 à $i_{MAX}$), on obtient cinq valeurs de $|DFD(z,D_i)|$ qui sont comparées au seuil S.

Le déplacement retenu est le premier qui donne une $|DFD|$ inférieure ou égale au seuil S. Si plusieurs déplacements sont obtenus à la même itération celui qui donne la différence inter-image déplacée $|DFD|$ la plus faible est choisi. En cas de nouvelle égalité sur $|DFD|$, un choix arbitraire est effectué dans l'ordre : $D_i^P$, $D_i^A$, $D_i^B$, $D_i^C$, $D_i^D$.

A chaque itération, $i(0\leqq i\leqq i_{MAX})$ est associé ainsi un déplacement $D_i$ une différence inter-trames déplacées DFD et un nombre d'itération i.

La décision est prise sur le nombre d'itérations le plus faible, puis sur la différence inter-image déplacée DFD minimale pour ensuite faire éventuellement un choix arbitraire.

Selon encore d'autres modes de réalisation du procédé selon l'invention il est encore possible d'effectuer des modifications sur le nombre des vecteurs d'initialisation ou sur les sens de propagation du mouvement dans l'image.

Dans les procédés d'estimation de mouvement décrits ci-dessus, pour éviter de privilégier un sens de propagation horizontal du mouvement dans l'image, de la gauche vers la droite par exemple, le sens du balayage horizontal est inversé une ligne sur deux de façon alternée. Il va de soi que, pour éviter de privilégier un sens de propagation vertical du mouvement dans l'image, du haut vers le bas par exemple, il est aussi possible d'inverser le sens de balayage vertical une image sur deux de façon alternée. Sans le suivi temporel, l'alternance du balayage vertical parait inutile à cause de l'indépendance du calcul des champs de mouvement entre les images successives.

Mais la combinaison du suivi temporel et de l'alternance de la direction de la récursion permet d'obtenir un champ de mouvement plus précis, moins sensible à cette direction de récursion, et d'accélérer la convergence de l'estimateur en particulier dans le haut de l'image par rapport à une estimation à récursion purement spatiale de direction verticale haut vers bas.

Il est également possible de ne prendre, en plus du mouvement initial de prédiction temporelle, que 3 valeurs initiales spatiales de déplacement du voisinage causal : $D_0^B$, $D_0^C$, $D_0^D$ ou seulement 2 valeurs initiales : $D_0^C$ et $D_0^D$ (figures 4b et 4c). Ceci se justifie d'un point de vue réalisation : l'utilisation du mouvement estimé pour le point A comme prédiction de mouvement pour le point courant z empêche toute parallélisation de l'estimation sur la ligne courante. Cependant, avec la suppression de $D_0^A$ disparaît la récursion horizontale et l'intérêt de l'alternance du balayage ligne) ce qui augmente l'effet de direction de récursion dans l'estimation du mouvement (essentiellement verticale).

Selon encore une autre variante de réalisation du procédé selon l'invention, l'alternance du sens de propagation du mouvement d'une trame à la suivante peut être obtenu par rotation. En effet, les relations (1) et (24) décrites précédemment définissent une relation entre les composantes horizontale et verticale du mouvement Dx et Dy, les gradients spatiaux de la luminance horizontal GX et vertical GY, et le gradient temporel dans la direction d'un mouvement initial DFD

tel que GX x DX + GY x DY = - DFD

et la fonction de correction de l'équation (1) D détermine une solution particulière de cette équation :

$$D = \frac{-DFD \times G}{|G|^2}$$

avec

$$G = (GX, GY)^T$$

Dans ces conditions en présence d'un contour purement vertical (GX $\neq$ 0, GY = 0), la composante DX est déterminée sans ambiguïté. Il en est de même pour la composante DY en présence d'un contour horizontal.

Or, dans une image, les gradients spatiaux ne sont pas répartis uniformément. D'où l'importance de la récursion dans la propagation des composantes significatives du mouvement : celle-ci doit être la plus isotrope possible pour créer un champ de mouvement précis et homogène.

C'est pourquoi il peut être envisagé de faire subir à chaque couple d'images sur lesquelles est estimé le mouvement une rotation d'un quart de tour : ceci permet de modifier la direction de récursion à chaque image. La combinaison de cette rotation et le suivi temporel favorisent l'accélération de la convergence de l'estimateur vers le mouvement réel.

Cette modification est particulièrement importante lorsque par exemple on ne dispose pas du vecteur de prédiction $D_0^A$ sur la même ligne que le point courant, ou d'une manière plus générale, lorsque le nombre de vecteurs de prédiction est réduit à 1 ou que le choix de ceux-ci réduit l'arc angulaire de propagation du mouvement par récursion en réduisant l'interdépendance spatiale des vecteurs estimés.

Cette modification peut être réalisée de la façon suivante :

1. Les vecteurs d'initialisation restent les vecteurs : $D_0^C$ , $D_0^D$ et éventuellement $D_0^B$ définis précédemment.

2. A chaque nouveau champ de mouvement à estimer, le nouveau couple d'images source subit une rotation. Cette rotation est alternativement de 0°, 90°, 180°, 270°, pour redevenir la même tous les 4 champs de mouvement.

3. De même le champ de mouvement de prédiction temporelle subit la même rotation et le signe de l'une ou des 2 composantes du mouvement est modifié selon la rotation de façon à conserver les sens de déplacement positifs.

4. Ainsi, les seules modifications intervenant dans l'estimateur sont relatives au format d'image : les paramètres de début et de fin de colonne DC et FC, et de début et fin de ligne DL et FL sont échangés à chaque nouveau couple d'images : DC prend la valeur de DL et vice versa, FC prend la valeur de FL et vice versa.

5. En fin d'estimation du champ de mouvement, celui ci subit une rotation et un changement de repère qui l'amène à l'orientation originale, pour application hors estimation de mouvement et prédiction temporelle.

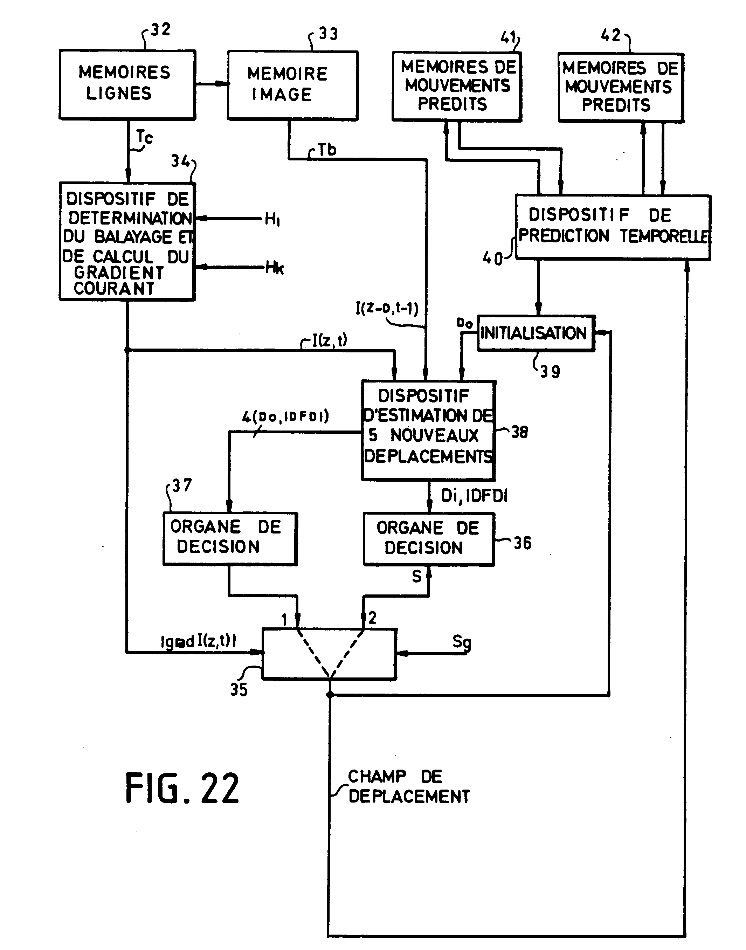

Un exemple de réalisation d'un premier dispositif d'estimation de déplacement mettant en oeuvre les phases du procédé représentées aux figures 20 et 21 est maintenant décrit à l'aide des figures 22 à 24. Il se compose sur la figure 22 d'un ensemble de mémoires ligne 32, d'une mémoire d'image 33, d'un dispositif de détermination du sens de balayage et de calcul du module du gradient courant 34, d'un dispositif d'aiguillage 35, des organes de décision 36 et 37 et d'estimation de déplacement 38, un dispositif d'initialisation 39 et un dispositif de prédiction temporelle 40 couplé à des mémoires de mouvements prédits 41 et 42. Le dispositif de détermination du sens de balayage et de calcul du module du gradient courant 34 reçoit ses informations de l'ensemble des mémoires lignes 32 et fournit le résultat des calculs au dispositif d'estimation de déplacement 38 et au dispositif d'aiguillage 35. Le dispositif d'estimation 38 de déplacement possède deux entrées qui sont reliées d'une part, à la sortie de l'ensemble des mémoires ligne 32 au travers du dispositif de détermination du sens de balayage et de calcul du gradient courant 20 et d'autre part, à la sortie de la mémoire d'image 33. La mémoire ligne 32 sert de tampon à la mémoire d'image 33 pour stocker les informations de rafraîchissement de la mémoire d'image 33 en attendant que les points analysés soient en dehors de la fenêtre d'exploration. Avec une fenêtre d'exploration occupant un espace de 10 lignes du type décrit à la figure 7, une mémoire ligne ayant une capacité de stockage de points correspondants à 5 lignes successives parait suffisante. Les calculs effectués ont lieu à la fréquence point, au rythme d'impulsions d'horloge $H_l$ et $H_k$ fournies par une horloge ligne non représentée. Le dispositif 34 détermine le numéro de la ligne courante I et en fonction de la parité du numéro de la ligne courante I il détermine le numéro de la colonne du point courant k. Disposant alors des coordonnées (k,I) du point courant le dispositif 34 calcule le module du gradient courant. Le dispositif d'aiguillage 35 compare le résultat du calcul fournit par le dispositif 34 à un seuil de référence Sg et conformément à l'algorithme représenté à la figure 20 valide son entrée 1 ou 2. L'entrée 1 est choisie si $|\text{grad } I(z,t)| \leq S_g$ et l'entrée 2 est choisie si $|\text{grad } I(z,t)| > S_g$. Les organes de décision 36 et 37 ont les fonctionnalités décrites par l'organigramme de la figure 21, et peuvent être réalisées de façon connue, soit à l'aide d'une structure microprogrammée du type à microprocesseur, soit encore à l'aide d'une logique câblée composée de façon connue par des circuits comparateurs.

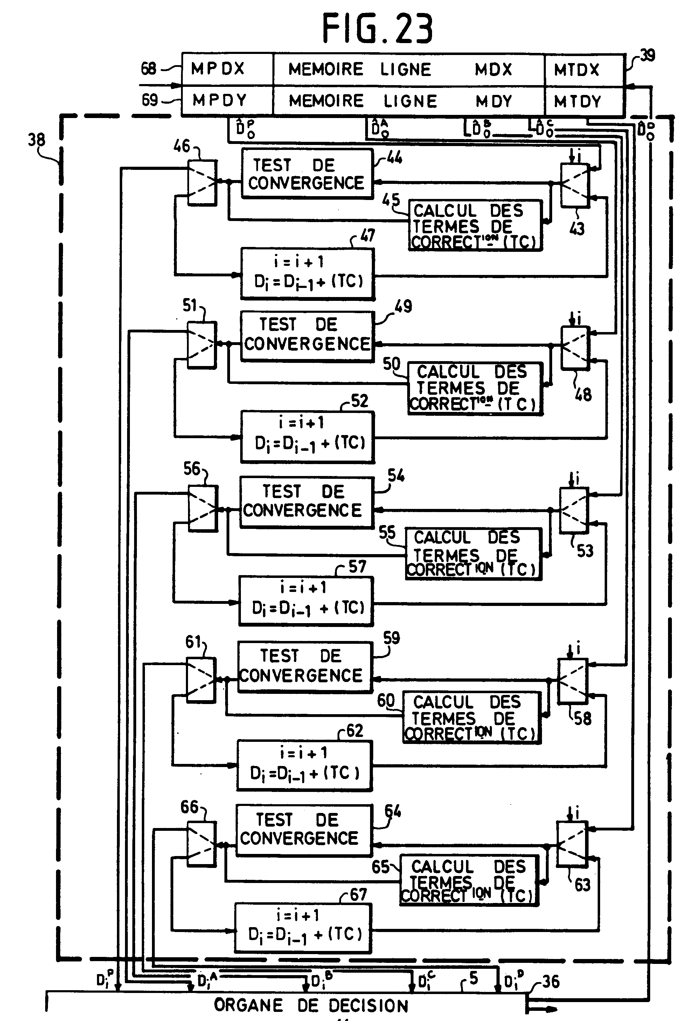

Un mode de réalisation d'un dispositif d'estimation de déplacement 38 est représenté à la figure 23. Il est constitué par un ensemble de calcul formé par les éléments 43 à 67. Ce dernier fournit les informations de déplacement $D_i^A$, $D_i^B$, $D_i^C$, $D_i^D$, $D_i^P$ à l'organe de décision 36 qui les transmet à l'entrée 2 du dispositif d'aiguillage 35, figure 22. Le bloc de l'initialisation 39 également représenté figure 23 permet d'initialiser l'algorithme de calcul de déplacement. Le bloc 39 comprend un premier registre 68 et un deuxième registre 69. Ces registres sont formés de trois parties distinctes, une pour mémoriser des mots binaires représentant le mot de déplacement en x ou en y appelés respectivement MDX et MDY, une autre pour servir de mémoire tampon aux mots de déplacement MTDX et MTDY calculés par l'organe de décision 36 et la dernière pour mémoriser les mots de prédiction de déplacement temporel MPDX et MPDY.

En utilisant les notations précédentes on a

MDX = (FC-DC-2DX$_{MAX}$+3) déplacements

MDY = (FC-DC-2DX$_{MAX}$+3) déplacements

MTDX = 1 déplacement

et

MTDY = 1 déplacement

Au début de chaque trame d'images l'ensemble des mots MDX, MDY, MTDX et MTDY est remis à zéro. MTDX et MTDY sont utilisés en tant qu'intermédiaires avant d'écraser les mots MDX et MDY correspondant aux déplacements D(k-1, I-1) pour le passage à l'analyse du point suivant (k+1,I). Il servent également d'intermédiaires avant d'écraser les mots MDX et MDY correspondant aux déplacements D(k+1,l-1) pour le passage à l'analyse du point suivant (k-1,l).

Lorsque k est égal à FC, le déplacement estimé D(FC,l) est placé automatiquement dans les mots (MTDX,MTDY) ainsi que dans les mots de (MDX,MDY) correspondant aux déplacements D(FC,l) et D(FC+1,l).

Quand k est égal à DC, le déplacement estimé D(DC,l) est mis automatiquement dans les mots (MTDX,MTDY) ainsi que dans les mots de (MDX,MDY) correspondant aux déplacements D(DC,l) et D(DC-1,l).

Le dispositif de calcul des estimations de déplacement, composé des éléments 43 à 67, effectue cinq calculs de déplacements en parallèle à partir de quatre valeurs initiales, $D_0^P$, $D_0^A$, $D_0^B$, $D_0^C$, $D_0^D$ contenues dans le bloc d'initialisation 39 lorsque le gradient spatial de l'image courante est supérieur au seuil Sg défini précédemment. Les informations $D_0^P$, $D_0^A$, $D_0^B$, $D_0^C$ $D_0^D$ sont appliquées respectivement sur des premières entrées des circuits aiguilleurs 43, 48, 53, 68 et 63 dont les sorties sont reliées à des blocs de test de convergence et de calcul de termes de corrections notés respectivement (44,45), (49,50), (54,55), (59,60) et (64,65). Les résultats des tests de convergence et le calcul des termes de correction sont appliqués sur des entrées de dispositifs d'aiguillage notés respectivement 46, 51, 56, 61 et 66 qui les dirigent ensuite, soit sur des entrées respectives de l'organe de décision 36, soit sur des dispositifs de calcul de nouveaux déplacements, notés respectivement 47, 52, 57, 62 et 64, lorsque la résolution de l'algorithme décrit précédemment diverge pour i inférieur à $i_{MAX}$. Les nouveaux déplacements fournis par les dispositifs de calculs 47, 52, 57, 62 et 67 sont appliqués respectivement sur les deuxièmes entrées des dispositifs d'aiguillages 43, 48, 53, 68 et 63.

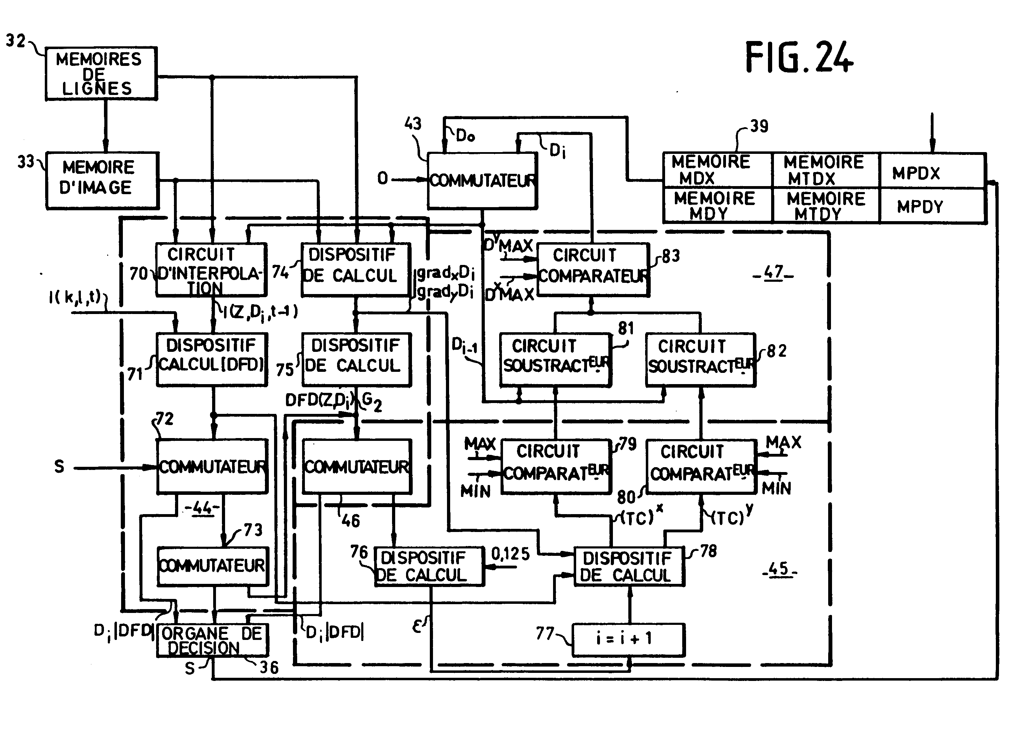

Les détails de réalisation d'un bloc de test de convergence 44 associés à un bloc de calcul des termes de corrections 45 et à un bloc de calcul de nouveaux déplacements 47 sont représentés à la figure 24 à l'intérieur de lignes en pointillées.

Le bloc de test de convergence 44 comprend d'une part, un circuit d'interpolation 70 couplé à un dispositif 71 de calcul de valeur absolue de la différence inter-image déplacée $|DFD|$, ce dernier étant couplé à l'organe de décision 36 au travers des commutateurs 72, 73 et d'autre part, un dispositif de calcul de gradient 74 couplé à un dispositif de calcul 75 de la somme des carrés des gradients déplacés. Le circuit d'interpolation 70, formé éventuellement par une mémoire morte programmable, est également couplé à la mémoire d'images 33. Le bloc de calcul des termes de correction 45 comprend un dispositif de calcul 76 de la valeur ε décrite précédemment couplé à un dispositif de calcul d'incrément 77 et à un dispositif de calcul 78 de valeurs de correction, ainsi que des circuits comparateurs 79 et 80.

Le bloc de calcul de nouveaux déplacements 47 comprend des circuits soustracteurs 81 et 82 couplés tous deux à un circuit comparateur 83. Le couplage entre le bloc de test de convergence 44 et le bloc de calcul des termes de correction 45 est réalisé par le commutateur 46 de la figure 23. L'entrée du commutateur 46 est couplée directement à la sortie du dispositif de calcul 75 et à la sortie du dispositif de calcul 71 au travers des commutateurs 72 et 73. D'autre part, comme sur la figure 23, le bloc d'initialisation 39 est couplé au bloc de test de convergence 44 par l'intermédiaire du commutateur 43. Ce commutateur relie le bloc d'initialisation 39 d'une part, à une première entrée du circuit d'interpolation 70 et d'autre part, à une première entrée du dispositif de calcul 74. La deuxième entrée du commutateur 43 est également couplée à la sortie du bloc de calcul du nouveau déplacement 47 qui est formée par le circuit comparateur 83.

Le fonctionnement du dispositif d'estimation de déplacement est le suivant. Pour chacun des points courant de l'image, le commutateur 43 transmet une valeur initiale $D_0$, trouvée dans le registre 39, au circuit d'interpolation 70 et au dispositif de calcul de gradient 74. Un calcul d'interpolation bilinéaire sur la valeur $D_0$ est effectué par le circuit d'interpolation 70 pour déterminer la luminance du point courant déplacé dans l'image précédente $I(z-D_0, t-1)$. La différence inter-image déplacée $DFD(z,D_0)$ et sa valeur absolue sont calculées par le dispositif de calcul 71 à partir de l'information de luminance du point courant. Le commutateur 72 transmet la valeur calculée par le dispositif de calcul 71 à destination de l'organe de décision 36 lorsque la valeur obtenue est inférieure ou égale au seuil S précédemment défini. Le déplacement $D_0$ et la valeur absolue de la différence inter-image déplacée $|DFD(D_0)|$ sont appliqués aux entrées de l'organe de décision 36. Dans le cas contraire, le résultat fourni par le dispositif de calcul 71 est appliqué à l'entrée du commutateur 73 puis à celle de l'organe de décision 36 lorsque la valeur de l'itération i est égale à la valeur d'itération maximale $i_{MAX}$. Par contre, lorsque la valeur de l'itération i est inférieure à la valeur maximale, le résultat est appliqué aux entrées du bloc de calcul de correction 45 au travers du commutateur 46.

Au cours de ces calculs, qui sont effectués durant un temps t depuis l'instant t=0, les gradients déplacés $grad_x$ et $grad_y$ et le terme $G_2 = 2.(grad_x^2 + grad_y^2)$ sont calculés par le dispositif de calcul 75.

Suivant la valeur de G2, le commutateur 46 dirige le résultat obtenu soit en direction de l'organe de décision 36 si la valeur de G2 obtenue est inférieure ou égale à une valeur de coefficient égale par exemple à 0,125, soit vers le bloc de calcul des termes de correction de nouveaux déplacements 45 et 47.

Le dispositif de calcul 76 calcule la valeur $\varepsilon = 1/G_2$. La valeur de l'itération i est augmentée de une unité par le dispositif de calcul d'incrément 77 et est remis à zéro à l'analyse du point courant suivant. Le calcul des termes $(TC)^x$ et $(TC)^y$ de correction en X et Y est effectué par le circuit 78. Les valeurs $(TC)^x$ et $(TC)^y$ obtenues sur les sorties du dispositif de calcul 78 vérifie les relations

$$(TC)^x = DFD(z,D_i) \times grad_x(D_i) \times$$

et

$$(TC)^y = DFD(z,D_i) \times grad_y(D_i) \times$$

Les valeurs $(TC)^x$ et $(TC)^y$ obtenues sont appliquées respectivement aux entrées des circuits comparateurs 79 et 80 pour être limités, à des conditions de signes près, à des valeurs maximales et minimales. Suivant un mode préféré de réalisation de l'invention les valeurs minimales de $(TC)^x$ et de $(TC)^y$ sont les mêmes et fixées à 1/16, par contre la valeur maximale de $(TC)^x$ est fixée égale à 3 et la valeur maximale de $(TC)^y$ est fixée égale à 2. Les termes $(TC)^x$ et $(TC)^y$ obtenus sont ajoutés aux valeurs de déplacement de $D_0^x$ et $D_0^y$ par les circuits soustracteurs 81 et 82 et les résultats obtenus $D_1^x$ et $D_1^y$ qui correspondent aux déplacements estimés sont à nouveau limités par le circuit comparateur 83 avant d'être appliqués sur la deuxième entrée du commutateur 43. A l'itération i suivante (i = 2) le commutateur 43 applique les déplacements estimés $D_1^x$ et $D_1^y$ aux circuits 70, 74, 81 ou 82.

En sortie de l'organe de décision 36 un déplacement est choisi pour le point courant et est écrit dans la mémoire tampon 39 contenant les mots MTDX et MTDY. i est remis à zéro et le commutateur 43 retourne sur sa position de départ et les calculs décrits précédemment sont recommencés pour estimer le déplacement du nouveau point courant.

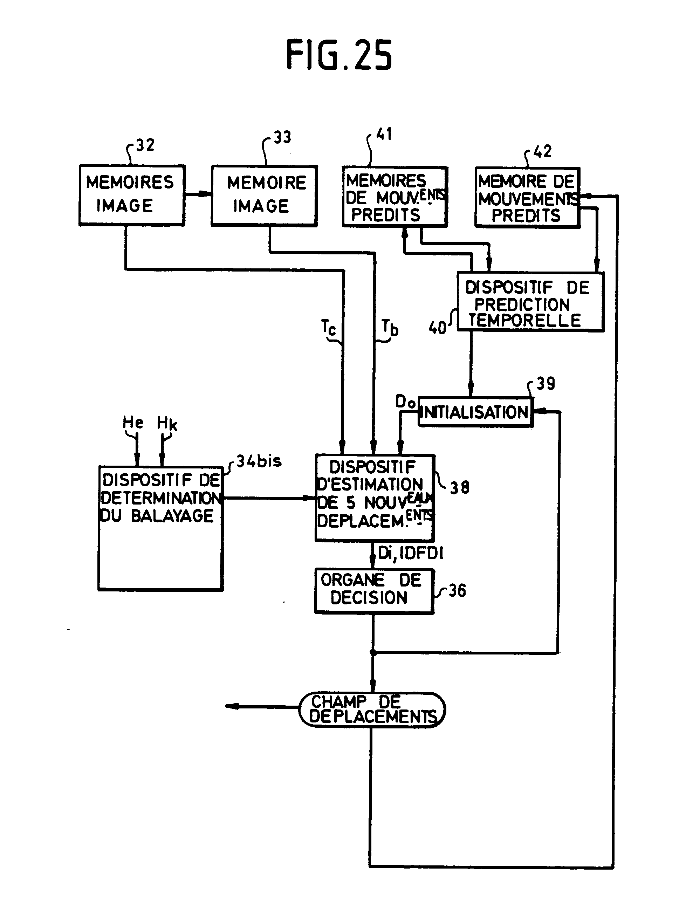

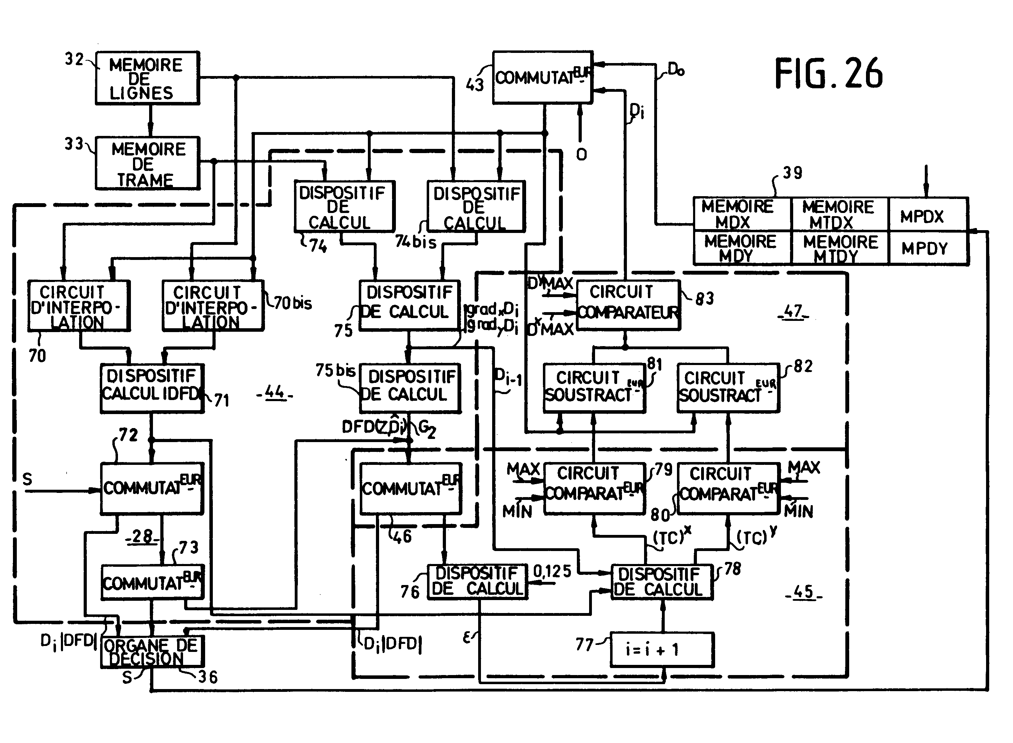

Un exemple de réalisation d'un deuxième dispositif d'estimation de déplacement mettant en oeuvre les phases du procédé représentées à la figure 18 est montré aux figures 25 et 26. Le dispositif représenté à la figure 25 diffère essentiellement de l'exemple décrit à la figure 22 par le fait qu'il ne possède qu'un organe de décision 36 et qu'il ne possède pas de dispositif d'aiguillage 35. De la sorte les éléments similaires à ceux de la figure 22 sont représentés avec les mêmes références.

Le dispositif d'estimation de nouveaux déplacements a une structure similaire à celle qui a été décrite à l'aide de la figure 23 seule diffère légèrement la structure du dispositif de calcul des estimations de déplacement dont un mode de réalisation correspondant est représenté à la figure 26. La différence porte essentiellement sur l'utilisation de deux circuits d'interpolation 70 et 70 bis et de deux dispositifs de calcul 74 et 74 bis au lieu respectivement d'un seul de ceux-ci.

Comme tous les autres éléments ont des structures similaires à celles de la figure 2, ceux-ci sont représentés sur la figure 26 avec les mêmes références.

Le fonctionnement du dispositif d'estimation de déplacement est le suivant. Pour chacun des points courants de l'image, le commutateur 43 transmet une valeur initiale de déplacement $D_0$, trouvée dans les registres 39 à destination des circuits d'interpolation 70 et 70 bis et des dispositifs de calcul de gradient 74 et 74 bis. La valeur $D_0$ initialise l'estimation. Un calcul d'interpolation bilinéaire est effectué, d'une part, par le circuit d'interpolation 70 pour déterminer la luminance $L(z-D_0 \times (Tj-Ta)/(Tb,Ta),Ta)$ du point courant $(z,Tj)$ déplacé dans la trame précédente d'instant Ta de la valeur $D_0 \times (Tj-Ta)/(Tb-Ta)$ et d'autre part, par le circuit d'interpolation 70 bis pour déterminer la luminance $L(z+D_0 \times (Tb-Tj)/(Tb,Ta),Tb))$ du même point courant déplacé cette fois dans la trame suivante Tb de la valeur $D_0 \times (Tb-Tj)/(Tb-Ta)$.

La différence inter-trames déplacées $DFD(z,D_0)$ et sa valeur absolue sont calculées par le dispositif de calcul 71. Le commutateur 72 transmet la valeur calculée par le dispositif de calcul 71 à destination de l'organe de décision 36 lorsque la valeur obtenue est inférieure ou égale au seuil S précédemment défini. Le déplacement $D_0$ et la valeur absolue de la différence inter-trame déplacée $DFD(D_0)$ sont appliqués aux entrées de l'organe de décision 36. Dans le cas contraire, le résultat fourni par le dispositif de calcul 71 est appliqué à l'entrée du commutateur 72 puis, à celle de l'organe de décision 36, lorsque la valeur de l'itération i est égale à la valeur d'itération maximale $i_{MAX}$. Par contre, dans les autres cas lorsque la valeur de l'itération i est inférieure à la valeur maximale, le résultat fourni par le dispositif de calcul 71 est appliqué aux entrées du bloc de calcul de correction 45 au travers du commutateur 46.

Au cours de ces calculs qui sont effectués durant un temps T depuis l'instant t = 0, les gradients au point courant déplacé dans chaque trame d'instants Ta et Tb (grad Xa, grad Ya) et (grad Xb, grad Yb) sont calculés parallèlement dans les dispositifs 74 et 74 bis. Puis des valeurs de gradients grad X et grad Y déterminées par les relations

$$2 \times grad\ X = grad\ Xa + grad\ Xb$$
$$2 \times grad\ Y = grad\ Ya + grad\ Yb$$

sont calculés par le dispositif 75. Le dispositif de calcul 75 bis calcule ensuite un terme de type $G2 = 2 \times (grad^2 X + grad^2 Y)$.

Les parités relatives des trames des instants Ta et Tj sont prises en compte dans les circuits 70 et 74 et les parités relatives des trames d'instants Tb et Tj sont prises en compte dans les circuits 70 bis et 74 bis.

Suivant la valeur de G2, le commutateur 46 dirige le résultat obtenu soit en direction de l'organe de décision 36 si la valeur de G2 obtenue est inférieure ou égale à une valeur de coefficient égale par exemple à 0,125, soit vers le bloc de calcul des termes de correction de nouveaux déplacements 45 et 47.

Le dispositif de calcul 76 calcule comme précédemment la valeur définie précédemment. La valeur de l'itération i est augmentée de une unité par le dispositif de calcul d'incrément 77 et est remis à zéro à l'analyse du point courant suivant. Le calcul des termes $(TC)^x$ et $(TC)^y$ de correction en X et Y est effectué par le circuit 78. Les valeurs $(TC)^x$ et $(TC)^y$ obtenues sur les sorties du dispositif de calcul 78 vérifient les relations

$$(TC)^x = DFD(z,D_i) \times grad_x(D_i) \times$$

et

$$(TC)^y = DFD(z,D_i) \times grad_y(D_i) \times$$

Les valeurs $(TC)^x$ et $(TC)^y$ obtenues sont appliquées respectivement aux entrées des circuits comparateurs 79 et 80 pour être limitées, à des conditions de signes près, à des valeurs maximales et minimales. Suivant un mode préféré de réalisation de l'invention les valeurs minimales de $(TC)^x$ et de $(TC)^y$ sont les mêmes et fixées à 1/16, par contre la valeur maximale de $(TC)^x$ est fixée à 3 et la valeur maximale de $(TC)^y$ est fixée égale à 2. Les termes $(TC)^x$ et $(TC)^y$ obtenus sont ajoutés aux valeurs de déplacement de $D_0^x$ et $D_0^y$ par les circuits 81 et 82 et les résultats $D_1^x$ et $D_1^y$ qui correspondent aux déplacements estimés sont à nouveau limités par le circuit comparateur 83 avant d'être appliqués sur la deuxième entrée du commutateur 43. A l'itération i suivante (i=2) le commutateur 43 applique les déplacements estimés $D_1^x$ et $D_1^y$ aux circuits 70, 70 bis, 74, 74 bis, 81 et 82.

En sortie de l'organe de décision 36 un déplacement est choisi pour le point courant et est écrit dans les zones MTDX et MTDY de la mémoire tampon 39. La valeur de l'itération i est remise à zéro, le commutateur 43 retourne sur sa position de départ et les calculs décrits précédemment sont recommencés pour estimer le déplacement du nouveau point courant.

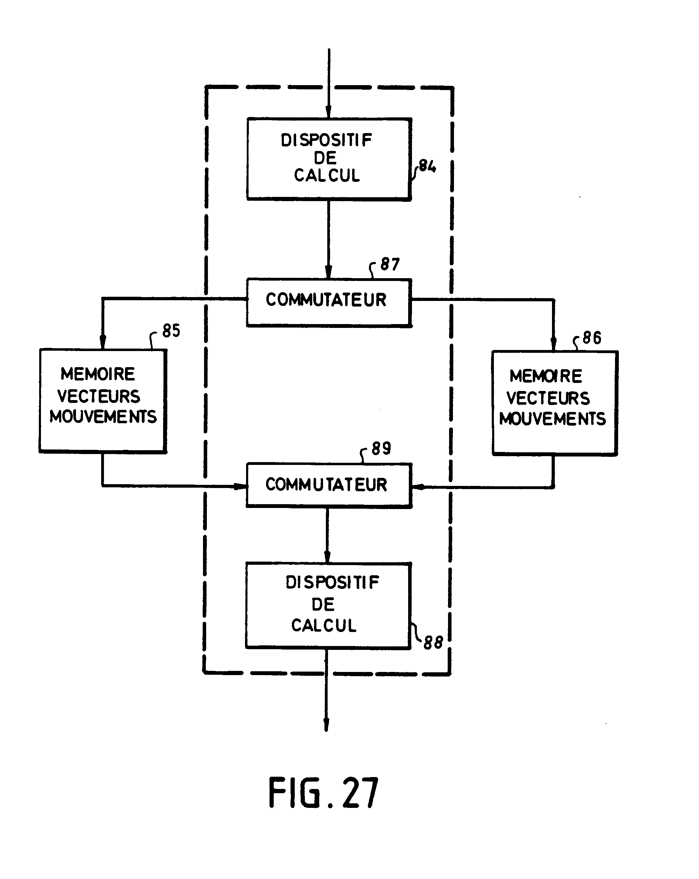

Un mode de réalisation d'un dispositif de prédiction temporelle est représenté à la figure 27. Il comprend un dispositif de calcul 84 couplé à deux mémoires 85 et 86 au travers d'un commutateur 87. Les sorties des mémoires 85 et 86 sont reliées à un autre dispositif de calcul 88 au travers d'un commutateur 89.

Le dispositif de calcul 84 est formé par une mémoire morte ou tout dispositif équivalent et est adressée par le vecteur mouvement courant estimé. Il calcule le point d'impact dans l'image ou la trame suivante, et le pixel le plus proche de ce point d'impact, auquel il associe le vecteur mouvement courant. Le commutateur 87 dirige ce vecteur vers l'une des mémoires 85 ou 86. Ces mémoires 86 et 87 sont montées en "Flip-Flop". En sortie de celles-ci, le commutateur 89 choisit la mémoire qui est en lecture. Le dispositif de calcul 89 détecte et bouche les trous dans le champ de mouvement prédit temporellement. La sortie du dispositif de calcul 88 est reliée au bloc d'initialisation 39. Dans ce dispositif, la résolution des conflits se fait simplement par écrasement par le nouveau vecteur associé au point courant du précédent vecteur associé à ce point.

Dans les modes de réalisation de l'invention précités il est clair que plus le nombre des points pris en compte et le nombre d'itérations pour effectuer les calculs sont grands plus les temps de calcul doivent être importants. Dans ces cas pour limiter au maximum les temps de calcul une amélioration des procédés de calculs précédents peut consister à ne faire exécuter les calculs qu'en une seule itération en limitant les calculs de gradients spatiaux à l'examen seulement des luminances des quatre points les plus proches du point extrémité du vecteur déplacement situé dans la trame courante.

Le procédé se résume alors, à calculer, en une seule itération et pour chaque vecteur déplacement estimé $D_{pj}$, une valeur $DFD(D_j)$ de différence inter-images déplacées entre la luminance du point courant et sa valeur de luminance dans la trame précédente décalée de la distance $D_{pj}$, à comparer entre elles des valeurs DFD obtenues pour sélectionner le vecteur de déplacement estimé $D_{pj}$ qui correspond à la valeur $DFD(D_{pj})$ la plus faible et à calculer le vecteur déplacement courant $D_j$ par exécution de l'algorithme de gradient à partir du gradient spatial du point extrémité du vecteur déplacement situé dans la trame courante et de la valeur $DFD(D_{pj})$ correspondante.

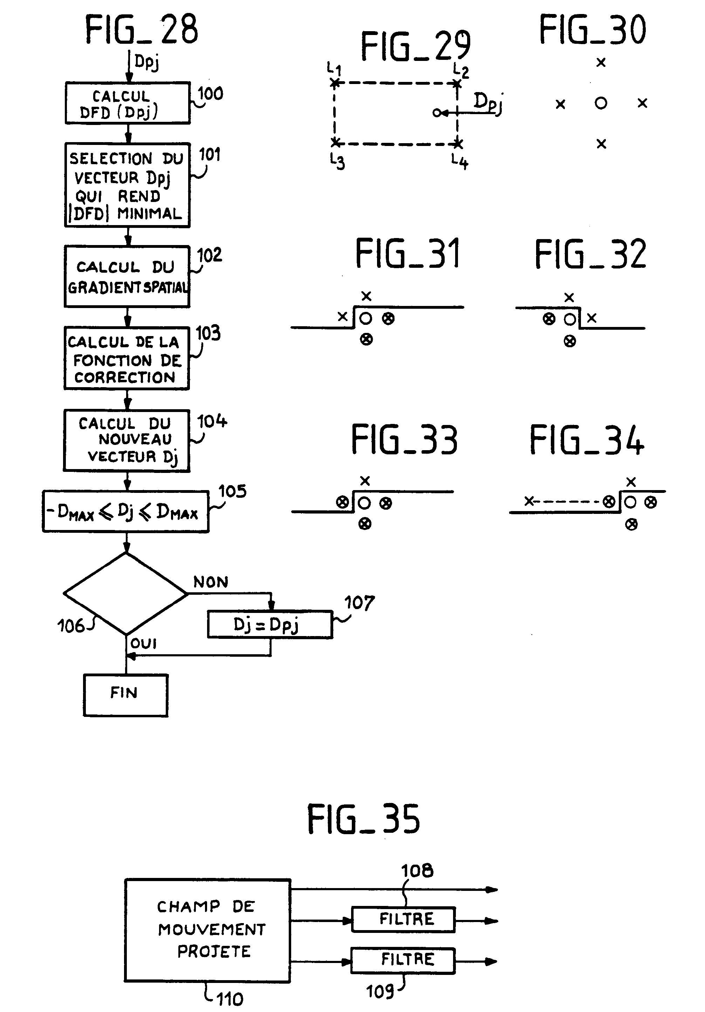

A la différence des procédures décrites précédemment, le procédé représenté à la figure 28 permet d'effectuer des estimations de mouvement suivant l'une ou l'autre des variantes de réalisation de l'invention à l'aide d'une seule itération. Selon une première étape représentée en 100 à la figure 28 une valeur de différence inter-trame déplacée $DFD(D_{pj})$ est calculée pour chaque vecteur déplacement $D_{pj}$ estimée. Puis à l'étape 101 une comparaison entre les valeurs absolues DFD est effectuée pour sélectionner le vecteur déplacement $D_{pj}$ qui donne lieu à la différence inter-image déplacée minimum. L'estimation du vecteur déplacement courant $D_j$ est alors effectuée par l'exécution des étapes 102 à 107. A l'étape 102 le gradient spatial aux extrémités du vecteur déplacement $D_{pj}$ est calculé. Ce calcul est effectué en considérant dans chaque trame comme mon-

17

tré à la figure 29 les quatre pixels les plus proches de l'extrémité du vecteur déplacement $D_{pj}$ contenu dans cette trame. Sur la figure 2, $L_1$, $L_2$, $L_3$ et $L_4$ désignent les luminances de chacun de ces points. La valeur du gradient spatial de composantes (GX, GY) suivant les directions horizontale X et verticale Y de balayage de l'image est donnée en fonction des valeurs $L_1$, $L_2$, $L_3$ et $L_4$ par les relations

$$GX = ((L_2 - L_1) + (L_4 - L_3))/2$$

et

$$GY = ((L_3 - L_1) + (L_4 - L_2))/2$$

Cette opération est effectuée pour les trames $T_a$ et $T_b$. Le gradient $D_{pj}$ est la moyenne des deux vecteurs gradients.

Le calcul du nouveau vecteur déplacement $D_j$ a leur à l'étape 104 par application de la formule du gradient précédente après avoir évalué à l'étape 103, de la manière décrite précédemment, les termes de correction à appliquer. Naturellement, comme cela a été expliqué précédemment les composantes du vecteur déplacement $D_j$ calculées doivent être limitées et un test est effectué aux étapes 105 et 106 pour vérifier que la valeur $D_j$ obtenue est comprise entre deux valeurs de déplacement prédéterminées -Dmax et +Dmax. Si tel n'est pas le cas, la valeur de $D_j$ qui est retenue est celle du déplacement $D_{pj}$ sélectionnée à l'étape 101.

Cette opération est effectuée pour chaque composante séparément. Il est possible d'effectuer un filtrage spatial du champ de mouvement ainsi obtenu par composante (horizontale et verticale). Ceci a l'avantage d'une part de le débruiter, d'autre part de l'homogénéiser et de le préciser dans les zones de l'image à luminance homogène, ou l'information mouvement n'est pas directement mesurable. Ce filtrage peut être effectué avant projection temporelle pour la définition du nouveau champ de prédiction. Il peut consister par exemple en un filtrage médian qui a pour effet de débruiter le signal, suivi d'un filtrage moyenneur qui permet de préciser en particulier le mouvement des zones homogènes.

Comme dans les procédés décrits précédemment, pour éviter de privilégier un sens de propagation du mouvement dans l'image horizontal ou vertical il est toujours possible soit d'inverser le sens de balayage horizontal d'une ligne sur deux de façon alternée soit encore d'inverser le sens de balayage vertical d'une image sur deux de façon alternée. Mais il est encore possible de faire subir à chaque couple d'image sur lequel est estimé le mouvement une rotation d'un quart de tour de façon à modifier la direction de récursion à chaque image pour que la combinaison de cette rotation et du suivi temporel favorisent l'accélération de la convergence de l'estimateur de mouvement vers le mouvement réel.

De même pour combler les trous existants dans le champ de prédiction du mouvement après projection temporelle le procédé qui consiste pour le trou courant à considérer les vecteurs s'ils existent des quatre pixels environnants et à définir le vecteur mouvement par la moyenne des composantes des vecteurs existants reste valable. Les trous sont examinés des manières représentées aux figures 30, 31 et 32 en alternant le balayage ligne. Les vecteurs existants sont alors au nombre de quatre au maximum et au nombre de deux au minimum, les pixels situés dans la partie causal ayant déjà été traités. Toutefois deux variantes de réalisation sont encore possibles. Une première peut consister à sélectionner le vecteur qui minimise la valeur absolue de la différence inter-image déplacée DFD pour le pixel trou courant afin de préciser le vecteur associé au trou en reprenant le vecteur indiqué ci-dessus. Une deuxième variante peut aussi consister à sélectionner le vecteur le plus proche de la moyenne des vecteurs. D'autre part, dans le cas de certaines réalisations il peut aussi être envisagé de ne pas prendre en compte le vecteur du pixel précédent si celui-ci correspond à un trou ceci pour des questions de parallélisation du traitement. Il est alors possible de travailler suivant la première variante ou de prendre le vecteur du dernier pixel qui n'était pas un trou suivant la deuxième variante de la façon représentée aux figures 33 et 34.

Naturellement la méthode de prédiction temporelle qui exploite largement la corrélation temporelle du mouvement et permet une convergence rapide de l'algorithme récursif est encore applicable. Cependant de la même façon que plusieurs vecteurs spatiaux sont sélectionnés a priori dans leur environnement causal il est aussi possible de sélectionner plusieurs prédicteurs temporels. Par exemple, plusieurs champs de prédiction du movement peuvent être obtenus par différents filtrages, au moyen par exemple d'une batterie de filtres 108, 109, du champ du mouvement issu de la projection temporelle mémorisé par exemple dans une mémoire 110 comme cela est représenté à la figure 35. Selon l'importance du filtrage du champ de mouvement le champ prédicteur pourra être soit adapté aux zones de rupture du mouvement ou au contraire aux zones de l'image à mouvement homogène.

Une mise en oeuvre du procédé qui vient d'être décrit peut naturellement être effectuée au moyen des dispositifs décrits précédemment, comme elle peut également avoir lieu comme pour l'exécution des procédés précédents en utilisant des structures de microprocesseurs connues convenablement programmés.

**Revendications**

1. Procédé d'estimation de mouvement dans une séquence d'images animées du type télévision où chaque image est formée par un nombre déterminé de points lumineux disposés aux croisements de lignes et de colonnes, du type dans lequel: l'estimation de mouvement est obtenue par l'exécution d'un algorithme de gradient qui rend minimal l'écart quadratique des variations locales de luminance du point courant de l'image avec un point causal déplacé qui lui est homologue dans l'image précédente, l'initialisation (7, 21) de l'algorithme a lieu à partir de vecteurs de déplacements estimés selon plusieurs directions à l'intérieur du proche voisinage causal du point courant et chaque estimation est propagée dans le sens du balayage des lignes de l'image, caractérisé en ce qu'il consiste également à initialiser l'exécution de l'algorithme au moyen d'un vecteur initial de prédiction temporelle défini (23, 24, 25, 26, 27) pour chaque point courant d'une trame d'image par le vecteur déplacement d'un point dans la trame précédente dont le point de projection dans la direction de son vecteur déplacement dans la trame courante est le plus proche du point courant.

2. Procédé selon la revendication 1 caractérisé en ce qu'il consiste, lorsque plusieurs projections suivant des vecteurs déplacement de points d'une trame aboutissent à un même point dans la trame courante, à retenir (25) comme vecteur déplacement celui qui donne la différence inter-image déplacée la plus faible.

3. Procédé selon les revendications 1 et 2 caractérisé en ce qu'il consiste, lorsqu'au point courant aucun vecteur déplacement temporel ne peut être attribué parce qu'aucun point voisin ne résulte d'une projection par un vecteur déplacement d'un point dans une trame qui précède la trame courante, à attribuer (26), au trou ainsi constitué de champ de mouvement, un vecteur mouvement résultant de la moyenne des vecteurs mouvement des points qui font partie de son voisinage.

4. Procédé selon l'une quelconque des revendications 1 à 3, caractérisé en ce que le sens du balayage est alterné une ligne sur deux.

5. Procédé selon l'une quelconque des revendications 1 à 4, caractérisé en ce qu'il consiste à choisir (1) un sens de propagation de l'algorithme en fonction de la position dans l'image de la ligne à laquelle appartient le point courant, à calculer le module du gradient (2) du point courant pour le comparer à une valeur de seuil prédéterminée (3), à choisir (4) un déplacement pour le point courant dans le voisinage causal de ce point lorsque le module du gradient obtenu est inférieur à la valeur de seuil prédéterminée en retenant le déplacement qui donne la différence inter-image déplacée la plus faible ou à estimer (5, 6) un nouveau déplacement lorsque le module du gradient obtenu est supérieur à la valeur de seuil prédéterminée.

6. Procédé selon la revendication 5, caractérisé en ce qu'il consiste, lorsque le module du gradient obtenu est supérieur à la valeur de seuil prédéterminée, à effectuer un calcul d'estimation (5) simultané d'un nombre déterminé N de déplacements à partir de N valeurs de déplacement initiales et à retenir la valeur de déplacement $D_i$ ($0 < i < i_{MAX}$) qui donne une convergence avec la différence inter-image déplacée $|DFD(D_i)|$ la plus faible (6).

7. Dispositif d'estimation de mouvement dans une séquence d'images animées du type télévision où chaque image est formée par un nombre déterminé de points lumineux disposés aux croisements de lignes et de colonnes, du type dans lequel l'estimation de mouvement est obtenue par l'exécution d'un algorithme de gradient qui rend minimal l'écart quadratique des variations locales de luminance du point courant de l'image avec un point causal déplacé qui lui est homologue dans l'image précédente, l'initialisation (7, 21) de l'algorithme a lieu à partir de vecteurs de déplacements estimés selon plusieurs directions à l'intérieur du proche voisinage causal du point courant et chaque estimation est propagée dans le sens du balayage des lignes de l'image, caractérisé en ce qu'il comprend une mémoire d'image (33) pour mémoriser les valeurs de luminance d'un nombre déterminé de points de l'image entourant l'homologue P(z, t-1) du point courant P(z,t) dans la trame d'image IMS(t-1) précédant la trame du point courant IMS(t), un dispositif de calcul du module du gradient de luminance du point courant (34), un premier et un deuxième organe de décision (36 et 37) et un dispositif d'estimation de déplacement (38), les sorties des deux organes de décision (36 et 37) étant couplées aux entrées d'un dispositif d'aiguillage (35) piloté par le dispositif de calcul du module du gradient courant (34), si la valeur du module du gradient courant est inférieure ou égale à une valeur de seuil prédéterminée le déplacement retenu est celui issu du deuxième organe de décision (37) sinon le déplacement retenu est celui issu du premier organe de décision (36).

**8.** Dispositif selon la revendication 7, caractérisé en ce que le dispositif d'estimation de déplacement comprend un bloc d'initialisation (39) pour mémoriser des déplacements initiaux suivant plusieurs directions couplé à un ensemble de calcul (43 ... 67) pour calculer, à partir des valeurs de déplacement initiales, des valeurs de déplacement pour lesquelles l'algorithme du gradient converge.

**9.** Dispositif selon la revendication 8, caractérisé en ce que l'ensemble de calcul est couplé à l'organe de décision (36) pour sélectionner la valeur de déplacement qui donne la convergence de l'algorithme la plus rapide.

**10.** Dispositif selon les revendications 8 et 9, caractérisé en ce que l'ensemble de calcul comprend pour chaque valeur de déplacement estimée $D_i$ ($0 < i < i_{MAX}$) bloc de test de convergence (44, 49, 54, 59, 64), couplé à un bloc de calcul de termes de correction (45, 50, 55, 60, 65) et à un dispositif de calcul de nouveaux déplacements (47, 52, 57, 62, 67).

**11.** Dispositif selon la revendication 10 caractérisé en ce que chaque bloc de test de convergence (44, 49, 54, 59, 64) comprend d'une part, un circuit d'interpolation (70) couplé à un dispositif de calcul (71) de valeur absolue de la différence inter-image déplacée, et d'autre part, un dispositif (74) de calcul du gradient couplé à un dispositif (75) de calcul de la somme des carrés des gradients déplacés obtenus suivant les deux directions de balayage horizontale et verticale de l'image.

**12.** Dispositif selon les revendications 10 et 11, caractérisé en ce que chaque bloc de calcul des termes de correction (45, 50, 55, 60, 65) comprend un dispositif de calcul (76) du gain de l'algorithme du gradient couplé à un dispositif de calcul d'incrément (77) et de valeur de correction (78).

**13.** Dispositif selon l'une quelconque des revendications 10, 11 et 12, caractérisé en ce que chaque dispositif de calcul de nouveaux déplacements comprend des circuits soustracteurs (81, 82) pour calculer des valeurs de déplacement en fonction des termes de correction calculés par les blocs de calcul de termes de correction (45, 50, 55, 60, 65).

**14.** Dispositif selon les revendications 12 et 13, caractérisé en ce que chaque terme de correction (TC) fourni par un bloc de calcul des termes de correction est égal au produit de la différence inter-image déplacée (DFD(z,D)) par la valeur de gradient du point déplacé P(z-D, t-1) et par le gain de l'algorithme .

**15.** Procédé d'estimation de mouvement selon l'une quelconque des revendications 1 à 6, caractérisé en ce qu'il consiste à déterminer un champ de mouvement entre deux trames successives (Ta, Tb) d'une séquence d'images sous la forme d'un champ de vecteurs attribué à une trame d'image fictive (Tj) localisée à proximité des deux trames (Ta, Tb).

**16.** Procédé selon la revendication 15, caractérisé en ce que le sens du balayage des lignes de la trame fictive est alterné une ligne sur deux.

**17.** Procédé selon les revendications 15 et 16, caractérisé en ce qu'il consiste à estimer le mouvement de chaque pixel dans la trame fictive (Tj) sous la forme d'un vecteur mouvement D(z,Tj) correspondant au déplacement du pixel P(z, Tj) entre les trames d'instants Ta et Tb, ce vecteur passant par le point courant P(z,Tj) et ayant respectivement ses extrémités sur les trames d'image d'instants Ta et Tb, l'estimation ayant lieu en effectuant un calcul par itération de vecteurs déplacement D1(z,Tj) suivant un algorithme de gradient qui rend minimal l'écart quadratique des variations locales de luminance du point courant dans la trame fictive Tj.

**18.** Procédé selon la revendication 17, caractérisé en ce que chaque déplacement $D_1(z,Tj)$ d'une itération i est obtenu à partir du vecteur déplacement $D_{i-1}(z,Tj)$ obtenu à l'itération i-1 précédente par la relation
$$D_i(z,Tj) = D_{i-1}(z,Tj) - (DFD(z,D_{i-1}).\text{grad } L(z,D_{i-1})) .2(\text{grad } L(z,D_{i-1}))^2)^{-1}$$
où : z désigne les coordonnées dans l'espace du point courant P(z,Tj) pour lequel est estimé le vecteur mouvement D(z,Tj)
- DFD($z,D_{i-1}$) désigne la différence inter-trames déplacées calculée entre les trames d'instants Ta et Tb
- et grad L($z,D_{i-1}$) désigne le gradient spatial demi somme des gradients spatiaux aux extrémités du vecteur déplacement $D_{i-1}$ sur les trames d'instants Ta et Tb.

**19.** Procédé selon la revendication 18, caractérisé en ce que l'estimation du vecteur mouvement D(z,Tj) pour le point courant du pixel P(z,Tj) est calculée à partir de cinq vecteurs déplacement d'initialisation correspondant à quatre vecteurs mouvement déjà estimés pour quatre points voisins dans le voisinage causal du point courant et à un vecteur initial de prédiction temporel estimé pour le point courant, les cinq vecteurs déplacement d'initialisation donnant lieu à cinq vecteurs mouvement estimés, seul le vecteur mouvement qui parmi les cinq estimés donne une convergence de l'algorithme du gradient avec la différence inter-trames la plus faible étant retenu.

**20.** Procédé selon l'une quelconque des revendications 18 et 19, caractérisé en ce que la différence inter-trame déplacée DFD(z,D$_{l-1}$) est obtenue en effectuant la différence temporelle dans la direction du déplacement D$_{l-1}$ des valeurs de luminance du point courant P(z,Tj) déplacé dans les trames d'instants Ta et Tb.

**21.** Procédé selon la revendication 20, caractérisé en ce que les luminances LA et LB du point courant déplacé respectivement dans les trames d'instants Ta et Tb sont obtenues par interpolation bilinéaire des valeurs de luminances In des 4 pixels entourant le point, extrémité du vecteur considéré, respectivement dans Ta et Tb.

**22.** Procédé selon l'une quelconque des revendications 17 à 21, caractérisé en ce que chaque vecteur déplacement D$_l$ est obtenu par soustraction du vecteur déplacement D$_{l-1}$, calculé à l'itération précédente, d'un terme de correction égale au produit de la différence inter-trame déplacée DFD(z,D$_{l-1}$) d'une part, par le gradient spatial de luminance grad L(z,D$_{l-1}$) et d'autre part de l'inverse de la demi-somme des gradients spatiaux aux extrémités du vecteur déplacement D$_{l-1}$ sur les trames d'instants Ta et Tb.

**23.** Dispositif d'estimation de mouvement dans une séquence d'images animées du type télévision où chaque image est formée par un nombre déterminé de points lumineux disposés aux croisements de lignes et de colonnes, du type dans lequel l'estimation de mouvement est obtenue par l'exécution d'un algorithme de gradient qui rend minimal l'écart quadratique des variations locales de luminance du point courant de l'image avec un point causal déplacé qui lui est homologue dans l'image précédente, l'initialisation (7, 21) de l'algorithme a lieu à partir de vecteurs de déplacements estimés selon plusieurs directions à l'intérieur du proche voisinage causal du point courant et chaque estimation est propagée dans le sens du balayage des lignes de l'image, caractérisé en ce qu'il comprend : une mémoire lignes (32) couplée à une mémoire de trame d'image (33) pour mémoriser respectivement les valeurs de luminance d'un nombre déterminé de points de l'image entourant les homologues du point courant P(z,Tj) et des points l'entourant dans les trames d'instants Ta et Tb, un dispositif d'estimation de déplacement (38) couplé à la mémoire lignes (32), à la mémoire de trame d'image (33) et à un organe de décision (36, 37) pour calculer, à partir des valeurs de luminance des points contenus dans la mémoire lignes et la mémoire de trame et à partir d'au moins une valeur de déplacement initiale contenue dans un bloc d'initialisation (39), un vecteur de déplacement pour chaque point courant P(z,Tj) de l'image.

**24.** Dispositif selon la revendication 23, caractérisé en ce que le dispositif d'estimation de déplacement comprend au moins un bloc de test de convergence (44, 49, 54, 59, 64) un bloc de calcul de terme de correction (45, 50, 55, 60, 65) et un bloc de calcul de nouveau déplacement (47, 52, 57, 62, 67).

**25.** Dispositif selon la revendication 24, caractérisé en ce qu'un bloc de test de convergence comprend, d'une part, un premier circuit d'interpolation (70) pour déterminer la luminance du point courant déplacé dans la trame d'instant Ta, un deuxième circuit d'interpolation (70 bis) pour déterminer la luminance du point courant déplacé dans la trame Tb, et un dispositif de calcul (71) couplé au premier et au deuxième circuit d'interpolation (70) et (70 bis) pour calculer en fonction des valeurs de luminance calculées par le premier (70) et le deuxième (70 bis) circuit d'interpolation la valeur absolue de la différence inter-image déplacée, la sortie du dispositif de calcul (71) étant couplée à l'organe de décision (36) au travers d'un premier (72) et d'un deuxième (73) commutateur ; d'autre part, un premier et un deuxième dispositif ( 74, 74 bis) de calcul de gradient couplé à un troisième dispositif de calcul (75) de calcul de la moyenne de gradients formés par le premier et le deuxième dispositif de calcul, le troisième dispositif de calcul (75) étant couplé à un quatrième dispositif de calcul (75 bis) de la somme des carrés des gradients moyens déplacés.

**26.** Dispositif selon les revendications 24 et 25, caractérisé en ce qu'un bloc de calcul de termes de correction comprend un cinquième dispositif de calcul (76) d'une valeur ε égale à l'inverse divisée par deux de la somme des carrés des gradients moyens déplacés fournis par le quatrième dispositif de calcul (75 bis) couplé au travers d'un dispositif de calcul d'incrément (77) à un dispositif de calcul de correction (78) couplé, d'une part, au troisième dispositif de calcul (75) et d'autre part, au deuxième commutateur (73) pour calculer des termes de correction en fonction de la valeur absolue de la différence inter-image déplacées fournie par le dispositif de calcul (71) et de la valeur $\varepsilon$, ainsi qu'au moins un circuit comparateur (79, 80) pour limiter la valeur des termes de correction obtenus du dispositif de calcul de correction (78).

27. Dispositif selon la revendication 26, caractérisé en ce qu'un bloc de calcul de nouveaux déplacements comprend des circuits soustracteurs (81, 82) pour soustraire les termes de correction à chaque nouvelle itération commandée par le dispositif de calcul d'incrément (77), de la valeur du déplacement calculée à l'itération précédente et rangée dans le bloc d'initialisation (39), pour obtenir les nouvelles valeurs de déplacement à chaque nouvelle itération et les ranger dans le bloc d'initialisation (39).

28. Dispositif selon l'une quelconque des revendications 7 à 14 d'une part, et 23 à 27 d'autre part, caractérisé en ce que le bloc d'initialisation (39) est couplé à un dispositif de prédiction temporelle (42) permettant le calcul du point d'impact dans la trame suivant la trame courante et le pixel le plus proche de ce point d'impact, en associant à ce point le vecteur mouvement du point courant.

29. Procédé d'estimation de mouvement dans une séquence d'images animées selon l'une quelconque des revendications 1 à 6 et 15 à 22 caractérisé en ce qu'il consiste à calculer, en une seule itération et pour chaque vecteur déplacement estimé $D_{pj}$, une valeur $DFD(D_{pj})$ de différence inter-images déplacée entre la luminance du point courant et sa valeur de luminance dans la trame précédente décalée de la distance $D_{pj}$, à comparer (101) les valeurs absolues des valeurs DFD obtenues pour sélectionner le vecteur de déplacement estimé $D_{pj}$ qui correspond à la valeur absolue de $DFD(D_{pj})$ la plus faible, et à calculer (102 ... 107) le vecteur déplacement courant $D_j$ par exécution de l'algorithme de gradient à partir du gradient spatial du vecteur déplacement sélectionné et de la valeur $DFD(D_{pj})$ correspondante.

30. Procédé selon la revendication 29 caractérisé en ce que le gradient spatial du point courant est calculé en ne prenant en compte que les quatre points les plus proches de chaque point extrémité du vecteur déplacement.

31. Procédé selon la revendication 30 caractérisé en ce que le gradient de chaque point extrémité du vecteur déplacement est calculé, en mesurant sur chaque ligne située à proximité de part et d'autre du point extrémité du vecteur déplacement, la différence des valeurs des luminances ($L_1$, $L_2$, $L_3$, $L_4$) des deux points sur chaque ligne adjacente au point extrémité du vecteur déplacement en prenant la moyenne des différences de luminance obtenues sur chaque ligne.

32. Procédé selon la revendication 31 caractérisé en ce que le gradient de chaque point extrémité du vecteur déplacement est calculé dans la direction du balayage vertical de l'image en mesurant, sur chaque colonne située à proximité et de part et d'autre du point extrémité du vecteur déplacement, la différence des valeurs des luminances ($L_1$, $L_2$, $L_3$, $L_4$)des deux points sur chaque colonne adjacente au point extrémité du vecteur déplacement en prenant la moyenne des différences des luminances obtenues sur chaque colonne.

33. Procédé selon l'une quelconque des revendications 29 à 32 caractérisé en ce qu'il consiste à faire subir à chaque couple d'image sur lequel est estimé le mouvement, une rotation d'un quart de tour.

34. Procédé selon l'une quelconque des revendications 29 à 33 caractérisé en ce qu'il consiste, pour combler des trous existants dans le champ de prédiction du mouvement après projection temporelle, à considérer pour chaque trou courant, les vecteurs s'ils existent des quatre pixels l'environnant et à définir le vecteur mouvement comme la moyenne des composantes des vecteurs existants.

35. Procédé selon la revendication 34 caractérisé en ce qu'il consiste pour définir un vecteur associé à un trou, à sélectionner le vecteur qui minimise la valeur absolue de la différence intra-image déplacée DFD pour le pixel trou courant.

36. Procédé selon la revendication 34 caractérisé en ce qu'il consiste à sélectionner le vecteur le plus proche de la moyenne des vecteurs existants.

37. Procédé selon l'une quelconque des revendications 29 à 36 caractérisé en ce qu'il consiste à définir plusieurs prédicteurs temporels pour chaque point de l'image courante par filtrages au moyen d'une batterie de filtres du champ de mouvement issu de la projection temporelle.

38. Procédé selon l'une quelconque des revendications 29 à 37 caractérisé en ce qu'il consiste à effectuer un filtrage spatial du champ de mouvement avant projection temporelle pour définir chaque nouveau champ de prédiction.

**Patentansprüche**

1. Verfahren zur Bewegungsabschätzung in einer Folge bewegter Bilder vom Fernsehtyp, wobei jedes Bild von einer bestimmten Anzahl von Lichtpunkten an den Schnittpunkten von Zeilen und Spalten gebildet wird, wobei die Bewegungsabschätzung durch Ablauf eines Gradientenalgorithmus erfolgt, der den quadratischen Abstand der örtlichen Helligkeitsvariationen des laufenden Bildpunkts mit einem homologen, kausalen, verschobenen Punkt im vorhergehenden Bild auf einen Mindestwert bringt, wobei die Initialisierung (7,21) des Algorithmus ausgehend von geschätzten Verschiebungsvektoren gemäß verschiedenen Richtungen innerhalb der direkten kausalen Nachbarschaft des laufenden Punkts erfolgt und jede Abschätzung sich in Richtung der Zeilenabtastung des Bilds fortpflanzt, dadurch gekennzeichnet, daß das Verfahren weiter darin besteht, den Ablauf des Algorithmus mit Hilfe eines Ursprungsvektors der zeitlichen Vorhersage (23, 24, 25, 26, 27) zu initialisieren, der für jeden laufenden Punkt eines Halbbilds durch den Verschiebungsvektor eines Punkts in dem vorhergehenden Halbbild definiert ist, dessen Projektionspunkt in der Richtung des Verschiebungsvektors im laufenden Halbbild dem laufenden Punkt am nächsten kommt.

2. Verfahren nach Anspruch 1, dadurch gekennzeichnet, daß, wenn mehrere Projektionen der Verschiebungsvektoren von Punkten eines Halbbilds im gleichen Punkt des laufenden Halbbilds enden, derjenige Verschiebungsvektor weiterbearbeitet wird (25), der die geringste verschobene Differenz zwischen Bildern liefert.

3. Verfahren nach Anspruch 1 und 2, dadurch gekennzeichnet, daß, wenn einem laufenden Punkt gar kein zeitlicher Verschiebungsvektor zugewiesen werden kann, weil kein Nachbarpunkt aus einer Projektion eines Verschiebungsvektors von einem Punkt in einem dem laufenden Bild vorausgehenden Halbbild resultiert, dem so im Bewegungsfeld gebildeten Loch ein Bewegungsvektor zugewiesen wird (26), der aus dem Mittelwert der Bewegungsvektoren der Punkte resultiert, die sich in seiner Nachbarschaft befinden.

4. Verfahren nach einem beliebigen der Ansprüche 1 bis 3, dadurch gekennzeichnet, daß die Abtastrichtung von Zeile zu Zeile abwechselt.

5. Verfahren nach einem beliebigen der Ansprüche 1 bis 4, dadurch gekennzeichnet, daß eine Fortschreitungsrichtung des Algorithmus abhängig von der Lage der Zeile im Bild gewählt wird (1), zu der der laufende Punkt gehört daß der Absolutwert des Gradienten (2) des laufenden Punkts berechnet wird, der mit einem vorbestimmten Schwellwert (3) verglichen wird, daß eine Verschiebung für den laufenden Punkt in der kausalen Umgebung dieses Punkts gewählt wird, wenn der erhaltene Absolutwert des Gradienten unterhalb des Schwellwert bleibt, indem die Verschiebung, die zur geringsten verschobenen Differenz zwischen Bildern führt weiterverarbeitet wird, oder daß eine neue Verschiebung geschätzt wird (5,6), wenn der erhaltene Absolutwert größer als der vorbestimmte Schwellwert ist.

6. Verfahren nach Anspruch 5, dadurch gekennzeichnet, daß, wenn der erhaltene Absolutwert des Gradienten größer als der vorbestimmte Schwellwert ist, eine gleichzeitige Schätzungsberechnung (5) einer bestimmten Anzahl N von Verschiebungen ausgehend von N ursprünglichen Verschiebungswerten durchgeführt wird und daß der Verschiebungswert $D_i(0<i<i_{MAX})$ weiterverarbeitet wird (6), der eine Konvergenz mit der geringswertigen verschobenen Differenz zwischen Bildern $|DFD(D_i)|$ ergibt.

7. Vorrichtung zur Bewegungsabschätzung in einer Folge bewegter Bilder vom Fernsehtyp, wobei jedes Bild von einer bestimmten Anzahl von Lichtpunkten an den Schnittpunkten von Zeilen und Spalten gebildet wird, wobei die Bewegungsabschätzung durch Ablauf eines Gradientenalgorithmus erfolgt, der den quadratischen Abstand der örtlichen Helligkeitsvariationen des laufenden Bildpunkts mit einem homologen, kausalen, verschobenen Punkt im vorhergehenden Bild auf einen Mindestwert bringt, wobei die Initialisierung (7,21) des Algorithmus ausgehend von geschätzten Verschiebungsvektoren gemäß verschiede- nen Richtungen innerhalb der direkten kausalen Nachbarschaft des laufenden Punkts erfolgt und jede Abschätzung sich in Richtung der Zeilenabtastung des Bilds fortpflanzt, dadurch gekennzeichnet, daß die Vorrichtung einen Bildspeicher (33) zur Speicherung der Helligkeitswerte einer bestimmten Anzahl von Bildpunkten, die den dem laufenden Punkt P(z,t) homologen Punkt P(z,t-1) in dem dem Halbbild IMS(t) des laufenden Punkts vorausgehenden Halbbild IMS(t-1) umgeben, eine Vorrichtung zur Berechnung des Absolutwerts des Helligkeitsgradienten des laufenden Punkts (34), ein erstes und ein zweites Entscheidungsorgan (36 und 37) sowie eine Vorrichtung zur Abschätzung der Verschiebung (38) aufweist, wobei die Ausgänge der beiden Entscheidungsorgane (36 und 37) mit den Eingängen einer Weichenvorrichtung (35) gekoppelt sind, die von der Vorrichtung zur Berechnung des Absolutwerts des laufenden Gradienten (34) gesteuert wird, wenn der Absolutwert des laufenden Gradienten einen vorgegebenen Schwellwert nicht überschreitet, wobei die gewählte Verschiebung diejenige aus dem zweiten Entscheidungsorgan (37) ist und ansonsten die aus dem ersten Entscheidungsorgan (36).

8. Vorrichtung nach Anspruch 7, dadurch gekennzeichnet, daß die Vorrichtung zur Abschätzung der Verschiebung einen Initialisierungsblock (39) aufweist, der die ursprünglichen Verschiebungen gemäß verschiedenen Richtungen speichert und mit einer Gruppe von Rechenorganen (43 bis 67) gekoppelt ist, die ausgehend von den ursprünglichen Verschiebungswerten Verschiebungswerte berechnen, für die der Gradientenalgorithmus konvergiert.

9. Vorrichtung nach Anspruch 8, dadurch gekennzeichnet, daß die Gruppe von Rechenorganen an das Entscheidungsorgan (36) gekoppelt ist, um den Verschiebungswert auszuwählen, der die schnellste Konvergenz des Algorithmus ergibt.

10. Vorrichtung nach den Ansprüchen 8 und 9, dadurch gekennzeichnet, daß die Gruppe von Rechenorganen für jeden geschätzten Verschiebungswert $D_i(0<i<i_{MAX})$ einen Block (44, 49, 54, 59, 64) zur Überprüfung der Konvergenz enthält, der mit einem Block zur Berechnung von Korrekturgrößen (45, 50, 55, 60, 65) und einer Vorrichtung zur Berechnung neuer Verschiebungen (47, 52, 57, 62, 67) gekoppelt ist.

11. Vorrichtung nach Anspruch 10, dadurch gekennzeichnet, daß jeder Block zur Überprüfung der Konvergenz (44, 49, 54, 59, 64) einerseits eine Interpolationsschaltung (70), die an eine Vorrichtung (71) zur Berechnung des Absolutwerts der verschobenen Differenz zwischen Bildern gekoppelt ist, und andererseits eine Vorrichtung (75) zur Gradientenberechnung aufweist, die an eine Vorrichtung (74) zur Berechnung der Summe der Quadrate der gemäß zwei Abtastrichtungen, der horizontalen und der vertikalen Abtastrichtung des Bildes erhaltenen verschobenen Gradienten gekoppelt ist.

12. Vorrichtung nach Anspruch 10 und 11, dadurch gekennzeichnet, daß jeder Block (45, 50, 55, 60, 65) zur Berechnung der Korrekturgrößen eine Vorrichtung (76) zur Berechnung des Gewinns des Gradientenalgorithmus aufweist, die an eine Vorrichtung (77) zur Berechnung des Inkrements und eine Vorrichtung (78) zur Berechnung des Korrekturwerts gekoppelt ist.

13. Vorrichtungen nach einem beliebigen der Ansprüche 10, 11 und 12, dadurch gekennzeichnet, daß jede Vorrichtung zur Berechnung neuer Verschiebungen Subtrahierschaltungen (81, 82) aufweist, um Verschiebungswerte abhängig von den Korrekturgrößen zu berechnen, die von den Blöcken zur Berechnung der Korrekturgrößen (45, 50, 55, 60 65) berechnet wurden.

14. Vorrichtung nach Anspruch 12 und 13, dadurch gekennzeichnet, daß jede Korrekturgröße (TC), die von einem Block zur Berechnung der Korrekturgrößen geliefert wird, dem Produkt der verschobenen Differenz zwischen Bildern (DFD(z,D)) mit dem Wert des Gradienten des verschobenen Punkts P(z-D,t-1) und dem Gewinn des Algorithmus gleicht.

15. Verfahren zur Bewegungsabschätzung nach einem beliebigen der Ansprüche 1 bis 6, dadurch gekennzeichnet, daß ein Bewegungsfeld zwischen zwei aufeinanderfolgenden Halbbildern (Ta, Tb) einer Bildfolge in Form eines Vektorfeldes bestimmt wird, das einem in der Nähe der beiden Halbbilder (Ta, Tb) liegenden fiktiven Halbbild (Tj) zugewiesen wird.

16. Verfahren nach Anspruch 15, dadurch gekennzeichnet, daß die Zeilenabtastrichtung des fiktiven Halbbilds von Zeile zu Zeile abwechselt.

17. Verfahren nach den Ansprüchen 15 und 16, dadurch gekennzeichnet, daß die Bewegung jedes Bildpunkts in dem fiktiven Halbbild (Tj) in Form eines Bewegungsvektors D(z,Tj) entsprechend der Verschiebung des Bildpunkts P(z,Tj) zwischen den Halbbildern Ta und Tb abgeschätzt wird, wobei dieser Vektor durch den laufenden Punkt P(z,Tj) verläuft und mit seinen beiden Enden in den Bildern Ta und Tb liegt, wobei zur Abschätzung eine iterative Berechnung von Verschiebungsvektoren $D_i(z,Tj)$ gemäß einem Gradientenalgorithmus erfolgt, der den quadratischen Abstand der örtlichen Helligkeitsvariationen des laufenden Punkts in dem fiktiven Halbbild Tj möglichst klein macht.

18. Verfahren nach Anspruch 17, dadurch gekennzeichnet, daß jede Verschiebung $D_i(z,Tj)$ einer Iteration i ausgehend vom Verschiebungsvektor $D_{i-1}(z,Tj)$ aus der vorhergehenden Iteration i-1 erhalten wird durch folgende Gleichung:

$$D_i(z,Tj) = D_{i-1}(Z,Tj) - (DFD(z,D_{i-1}).grad\ L(z,D_{i-1})).$$
$$2(grad\ L(z,D_{i-1})^2)^{-1}$$

wobei z die räumlichen Koordinaten des laufenden Punkts P(z,Tj) bezeichnet, für den der Bewegungsvektor D(z,Tj) abgeschätzt wird, $DFD(z,D_{i-1})$ die zwischen den Halbbildern Ta und Tb berechnete verschobene Differenz zwischen Bildern bezeichnet und grad $L(z,D_{i-1})$ den räumlichen Gradienten der halben Summe der räumlichen Gradienten an den Enden des Verschiebungsvektors $D_{i-1}$ in den Halbbildern Ta und Tb bezeichnet.

19. Verfahren nach Anspruch 18, dadurch gekennzeichnet, daß die Abschätzung des Bewegungsvektors D(z,Tj) für den laufenden Bildpunkt P(z,Tj) ausgehend von fünf Initialisierungs--Verschiebungsvektoren berechnet wird, die vier bereits für vier Punkte in der kausalen Nachbarschaft des laufenden Punkts abgeschätzten Bewegungsvektoren und einem für den laufenden Punkt ursprünglich abgeschätzten Vektor der zeitlichen Vorhersage entsprechen, wobei die fünf Initialisie-rungs-Verschiebungsvektoren zu fünf Vektoren der geschätzten Bewegung führen, von denen der Bewegungsvektor, der unter den fünf Schätzvektoren eine Konvergenz des Gradientenalgorithmus mit der geringsten Differenz zwischen Bildern ergibt, weiterverarbeitet wird.

20. Verfahren nach einem beliebigen der Ansprüche 18 und 19, dadurch gekennzeichnet, daß die verschobene Differenz zwischen Halbbildern $DFD(z,D_{i-1})$ erhalten wird, indem die zeitliche Differenz in der Verschieberichtung $D_{i-1}$ der Helligkeitswerte des verschobenen laufenden Punkts P(z,Tj) in den Halbbildern Ta und Tb gebildet wird.

21. Verfahren nach Anspruch 20, dadurch gekennzeichnet, daß die Helligkeiten LA und LB des verschobenen laufenden Punkts in dem Halbbild Ta bzw. Tb durch zweifach lineare Interpolation der Helligkeitswerte In der vier diesen Punkt umgebenden Bildpunkte erhalten werden, wobei das Ende des Vektors im Bild Ta bzw. Tb betrachtet wird.

22. Verfahren nach einem beliebigen der Ansprüche 17 bis 21, dadurch gekennzeichnet, daß jeder Verschiebungsvektor $D_i$ erhalten wird, indem von dem in der vorhergehenden Iteration berechneten Verschiebungsvektor $D_{i-1}$ eine Korrekturgröße abgezogen wird, die dem Produkt aus der verschobenen Differenz zwischen Bildern $DFD(z,D_{i-1})$ einerseits mit dem räumlichen Helligkeitsgradienten grad $L(z,D_{i-1})$ und andererseits mit dem inversen der halben Summe der räumlichen Gradienten an den Enden des Verschiebungsvektors $D_{i-1}$ in den Bildern Ta und Tb gleicht.

23. Verfahren zur Bewegungsabschätzung in einer Folge bewegter Bilder vom Fernsehtyp, wobei jedes Bild von einer bestimmten Anzahl von Lichtpunkten an den Schnittpunkten von Zeilen und Spalten gebildet wird, wobei die Bewegungsabschätzung durch Ablauf eines Gradientenalgorithmus erfolgt, der den quadratischen Abstand der örtlichen Helligkeitsvariationen des laufenden Bildpunkts mit einem homologen, kausalen, verschobenen Punkt im vorhergehenden Bild auf einen Mindestwert bringt, wobei die Initialisierung (7,21) des Algorithmus ausgehend von geschätzten Verschiebungsvektoren gemäß verschiedenen Richtungen innerhalb der direkten kausalen Nachbarschaft des laufenden Punkts erfolgt und jede Abschätzung sich in Richtung der Zeilenabtastung des Bilds fortpflanzt, dadurch gekennzeichnet, daß sie einen Zeilenspeicher (32), der mit dem Halbbildspeicher (33) gekoppelt ist, um die Helligkeitswerte einer bestimmten Anzahl von den homologen Punkten des laufenden Bilds (P(z,Tj)) und der umgebenden Punkte in den Halbbildern Ta und Tb zu speichern, und eine Vorrichtung (38) zur Verschiebungsabschätzung aufweist, die mit dem Zeilenspeicher (32), dem Bildspeicher (33) und einem Entscheidungsorgan (36, 37) gekoppelt ist, um ausgehend von Helligkeitswerten der in dem Zeilenspeicher und dem Bildspeicher enthaltenen Punkte und ausgehend von mindestens einem ursprünglichen Verschiebungswert, der in einem Initialisierungsblock (39), enthalten ist, einen Verschiebungsvektor für jeden laufenden Bildpunkt

EP 0 360 698 B1

(P(z,Tj)) zu berechnen.

24. Vorrichtung nach Anspruch 23, dadurch gekennzeichnet, daß die Verschiebungsabschätzvorrichung mindestens einen Block (44, 49, 54, 59, 64), einen Block zur Berechnung der Korrekturgröße (45, 50, 55, 60, 65) und einen Block zur Berechnung einer neuen Verschiebung (47, 52, 57, 62, 67) enthält.

25. Vorrichtung nach Anspruch 24, dadurch gekennzeichnet, daß ein Block zur Überprüfung der Konvergenz einerseits eine erste Interpolationsschaltung (70) zur Bestimmung der Helligkeit des verschobenen laufenden Punkts im laufenden Halbbild Ta und eine zweite Interpolationsschaltung (70bis) zur Bestimmung der Helligkeit des laufenden verschobenen Punkts in dem Halbbild Tb, sowie eine Rechenvorrichtung (71) aufweist, die mit der ersten und der zweiten Interpolationsschaltung (70, 70bis) gekoppelt ist, um abhängig von den in der ersten und zweiten Interpolationsschaltung (70, 70bis) berechneten Helligkeitswerten den Absolutwert der verschobenen Differenz zwischen Bildern zu berechnen, wobei der Ausgang der Rechenvorrichtung (71) mit dem Entscheidungsorgan (36) über einen ersten und zweiten Schalter (72, 73) gekoppelt ist, und daß weiter eine erste und eine zweite Vorrichtung (74, 74bis) zur Berechnung des Gradienten vorgesehen sind, die mit einer dritten Rechenvorrichtung (75) zur Berechnung des Mittelwerts von in der ersten und zweiten Rechenvorrichtung gebildeten Gradienten vorgesehen sind, wobei die dritte Rechenvorrichtung (75) mit einer vierten Rechenvorrichtung (75bis) gekoppelt ist, die die Summe der Quadrate der verschobenen mittleren Gradienten bildet.

26. Vorrichtung nach den Ansprüchen 24 und 25, dadurch gekennzeichnet, daß ein Block zur Berechnung der Korrekturgrößen eine fünfte Rechenvorrichtung (76) zur Berechnung eines Werts $\varepsilon$ gleich dem durch 2 dividierten inversen Wert der Summe der Quadrate der verschobenen mittleren Gradienten aufweist, die von der vierten Rechenvorrichtung (75 bis) geliefert werden, wobei die fünfte Rechenvorrichtung über eine Inkrementrechenvorrichtung (77) an eine Vorrichtung zur Berechnung des Korrekturwerts (78) gekoppelt ist, die ihrerseits erstens mit der dritten Rechenvorrichtung (75) und zweitens mit dem zweiten Schalter (73) verbunden ist, um Korrekturgrößen abhängig vom Absolutwert der verschobenen Differenz zwischen Bildern zur berechnen, die von der Rechenvorrichtung (71) geliefert wird, und abhängig vom Wert $\varepsilon$, und daß mindestens ein Komparator (79, 80) vorgesehen ist, um den Wert der Korrekturgrößen, die in der Vorrichtung zur Berechnung der Korrekturgröße (78) erhalten werden, zu begrenzen.

27. Vorrichtung nach Anspruch 26, dadurch gekennzeichnet, daß ein Rechenblock für neue Verschiebungen Subtrahierschaltungen (81, 82) aufweist, um die Korrekturgrößen bei jeder neuen, von der Inkrementrechenvorrichtung (77) gesteuerten Iteration vom bei der vorhergehenden Iteration berechneten und im Initialisierungsblock (39) gespeicherten Verschiebungswert abzuziehen, um die neuen Verschiebungswerte bei jeder neuen Iteration zu erhalten und um sie im Initialisierungsblock (39) zu speichern.

28. Vorrichtung nach einem beliebigen der Ansprüche 7 bis 14 einerseits und 23 bis 27 andererseits, dadurch gekennzeichnet, daß der Initialisierungsblock (39) an eine Vorrichtung zur zeitlichen Vorhersage (42) gekoppelt ist, die die Berechnung des Auftreffpunkts in dem auf das laufende Halbbild folgende Halbbild und des diesem Auftreffpunkt nächstliegenden Bildpunkts erlaubt, indem diesem Punkt der Bewegungsvektor des laufenden Punkts zugewiesen wird.

29. Verfahren zur Abschätzung der Bewegung in einer Folge von bewegten Bildern nach einem beliebigen der Ansprüche 1 bis 6 und 15 bis 22, dadurch gekennzeichnet, daß in einer einzigen Iteration und für jeden geschätzten Verschiebungsvektor $D_{pj}$ ein Wert $DFD(D_{pj})$ der verschobenen Differenz zwischen Bildern zwischen der Helligkeit des laufenden Punkts und dem Helligkeitswert im vorhergehenden Bild berechnet wird, das um den Abstand $D_{pj}$ verschoben ist, daß die Absolutwerte der Größen DFD verglichen werden (101), um den geschätzten Verschiebungsvektor $D_{pj}$ auszuwählen, der dem niedrigsten Absolutwert von $DFD(D_{pj})$ entspricht, und daß der laufende Verschiebungsvektor $D_j$ durch Anwendung des Gradientenalgorithmus auf den räumlichen Gradienten des ausgewählten Verschiebungsvektors und den entsprechenden Wert $DFD (D_{pj})$ berechnet wird (102 bis 107).

30. Verfahren nach Anspruch 29, dadurch gekennzeichnet, daß der räumliche Gradient des laufenden Punkts unter Berücksichtigung nur der vier nächstliegenden Punkte jedes Endpunkts des Verschiebungsvektors berechnet wird.

31. Verfahren nach Anspruch 30, dadurch gekennzeichnet, daß der Gradient jedes Endpunkts des Verschiebungsvektors berechnet wird, indem in jeder Zeile die zu beiden Seiten eines Endpunkts des Verschie-

26

bungsvektors liegt, die Differenz der Helligkeitswerte ($L_1$, $L_2$, $L_3$, $L_4$) der beiden Punkte auf jeder Zeile gemessen wird, die dem Endpunkt des Verschiebungsvektors benachbart ist, indem der Mittelwert der erhaltenen Helligkeitsdifferenzen auf jeder Zeile verwendet wird.

32. Verfahren nach Anspruch 31, dadurch gekennzeichnet, daß der Gradient jedes Endpunkts des Verschiebungsvektors in Richtung der senkrechten Abtastung des Bildes berechnet wird, in dem in jeder Spalte, die in der Nähe und zu beiden Seiten des Endpunkts des Verschiebungsvektors liegt, die Differenz der Helligkeitswerte ($L_1$, $L_2$, $L_3$, $L_4$) der beiden Punkte in jeder dem Endpunkt des Verschiebungsvektors benachbarten Spalte gemessen wird, indem der Mittelwert der in jeder Spalte erhaltenen Helligkeitsdifferenzen berücksichtigt wird.

33. Verfahren nach einem beliebigen der Ansprüche 29 bis 32, dadurch gekennzeichnet, daß jedes Bildpaar, aus dem die Bewegung abgeschätzt wird, eine Drehung um 90° erfährt.

34. Verfahren nach einem beliebigen der Ansprüche 29 bis 33, dadurch gekennzeichnet, daß zum Füllen der im Bewegungsvorhersagefeld nach der zeitlichen Projektion existierenden Löcher für jedes laufende Loch die Vektoren der vier umgebenden Bildpunkte, soweit sie existieren, betrachtet werden und der Bewegungsvektor als das Mittel der Komponenten der existierenden Vektoren definiert wird.

35. Verfahren nach Anspruch 34, dadurch gekennzeichnet, daß zur Definition eines einem Loch zugewiesenen Vektors der Vektor ausgewählt wird, der den Absolutwert von DFD für das Loch am laufenden Bildpunkt auf den kleinsten Wert bringt.

36. Verfahren nach Anspruch 34, dadurch gekennzeichnet, daß der dem Mittelwert der existierenden Vektoren der nächstliegende Vektor ausgewählt wird.

37. Verfahren nach einem beliebigen der Ansprüche 29 bis 36, dadurch gekennzeichnet, daß mehrere zeitliche Vorhersageorgane für jeden laufenden Bildpunkt durch Filtern des von der zeitlichen Projektion stammenden Bewegungsfelds mit Hilfe einer Filterbatterie definiert werden.

38. Verfahren nach einem beliebigen der Ansprüche 29 bis 37, dadurch gekennzeichnet, daß eine räumliche Filterung des Bewegungsfeldes vor der zeitlichen Projektion erfolgt, um jedes neue Vorhersagefeld zu definieren.

## Claims

1. Process for estimating motion in a sequence of moving images of the television type in which each image is formed by a specified number of light points arranged at the intersections of lines and columns, of the type in which: motion estimation is achieved by executing a gradient algorithm which minimizes the square deviation of the local variations in luminance of the current point of the image from a displaced causal point which is its homologue in the previous image, the initializing (7, 21) of the algorithm takes place on the basis of displacement vectors estimated in several directions inside the near causal neighbourhood of the current point and each estimation is propagated in the direction of scan of the lines of the image, characterized in that it consists also in initializing the execution of the algorithm by means of an initial temporal prediction vector (23, 24, 25, 26, 27) defined for each current point of an image frame by the displacement vector of a point in the previous frame whose point of projection in the direction of its displacement vector in the current frame is nearest the current point.

2. Process according to Claim 1, characterized in that it consists, when several projections along displacement vectors of points of a frame culminate at a same point in the current frame, in retaining (25) as displacement vector that one which gives the smallest displaced inter-image difference.

3. Process according to Claims 1 and 2, characterized in that it consists, when no temporal displacement vector can be allocated to the current point because no neighbouring point results from a projection by a displacement vector of a point in a frame which precedes the current frame, in allocating (26), to the hole thus constituted in the field of motion, a motion vector resulting from the mean of the motion vectors of the points which form part of its neighbourhood.

4. Process according to any one of Claims 1 to 3, characterized in that the direction of scan is alternated every second line.

5. Process according to any one of Claims 1 to 4, characterized in that it consists in choosing (1) a direction of propagation of the algorithm as a function of the position in the image of the line to which the current point belongs, in calculating the modulus of the gradient (2) of the current point so as to compare it with a predetermined threshold value (3), in choosing (4) a displacement for the current point in the causal neighbourhood of this point when the modulus of the gradient obtained is less than the predetermined threshold value by retaining the displacement which gives the smallest displaced inter-image difference or in estimating (5, 6) a new displacement when the modulus of the gradient obtained is greater than the predetermined threshold value.

6. Process according to Claim 5, characterized in that it consists, when the modulus of the gradient obtained is greater than the predetermined threshold value, in performing a simultaneous estimation calculation (5) of a specified number N of displacements on the basis of N initial displacement values and in retaining the displacement value $D_i$ ($0 < i < i_{MAX}$) which gives convergence with the smallest (6) displaced inter-image difference $|DFD(D_i)|$.

7. Device for estimating motion in a sequence of moving images of the television type in which each image is formed by a specified number of light points arranged at the intersections of lines and columns, of the type in which: motion estimation is achieved by executing a gradient algorithm which minimizes the square deviation of the local variations in luminance of the current point of the image from a displaced causal point which is its homologue in the previous image, the initializing (7, 21) of the algorithm takes place on the basis of displacement vectors estimated in several directions inside the near causal neighbourhood of the current point and each estimation is propagated in the direction of scan of the lines of the image, characterized in that it comprises an image memory (33) for storing the luminance values of a specified number of points of the image surrounding the homologue P(z,t-1) of the current point P(z,t) in the image frame IMS(t-1) preceding the frame of the current point IMS(t), a device for calculating the modulus of the gradient of luminance of the current point (34), a first and a second decision module (36 and 37) and a displacement estimation device (38), the outputs of the two decision modules (36 and 37) being coupled to the inputs of a routing device (35) driven by the device for calculating the modulus of the current gradient (34), if the value of the modulus of the current gradient is less than or equal to a predetermined threshold value the displacement retained is that arising from the second decision module (37), otherwise the displacement retained is that arising from the first decision module (36).

8. Device according to Claim 7, characterized in that the displacement estimation device comprises an initializing block (39) for storing initial displacements in several directions, and which is coupled to a calculating assembly (43 ... 67) for calculating, on the basis of the initial displacement values, displacement values for which the gradient algorithm converges.

9. Device according to Claim 8, characterized in that the calculating assembly is coupled to the decision module (36) in order to select the displacement value which gives fastest convergence of the algorithm.

10. Device according to Claims 8 and 9, characterized in that the calculating assembly comprises, for each estimated displacement value $D_i$ ($0 < i < i_{MAX}$), a convergence testing block (44, 49, 54, 59, 64) coupled to a block for calculating correction terms (45, 50, 55, 60, 65) and to a device for calculating new displacements (47, 52, 57, 62, 67).

11. Device according to Claim 10, characterized in that each convergence testing block (44, 49, 54, 59, 64) comprises, on the one hand, an interpolation circuit (70) coupled to a device for calculating (71) the absolute value of the displaced inter-image difference and, on the other hand, a device (74) for calculating the gradient coupled to a device (75) for calculating the sum of the squares of the displaced gradients obtained along two directions of scan, horizontal and vertical, of the image.

12. Device according to Claims 10 and 11, characterized in that each block for calculating correction terms (45, 50, 55, 60, 65) comprises a device for calculating (76) the gain of the gradient algorithm coupled to a device for calculating an increment (77) and a correction value (78).

13. Device according to any one of Claims 10, 11 and 12, characterized in that each device for calculating new displacements comprises subtractor circuits (81, 82) for calculating displacement values as a function of the correction terms calculated by the blocks for calculating correction terms (45, 50, 55, 60, 65).

14. Device according to Claims 12 and 13, characterized in that each correction term (TC) provided by a block for calculating correction terms is equal to the product of the displaced inter-image difference (DFD(z,D)) times the value of the gradient of the displaced point P(z-D,t-1) and times the gain of the algorithm.

15. Process for estimating motion according to any one of Claims 1 to 6, characterized in that it consists in determining a motion field between two successive frames (Ta, Tb) of an image sequence in the form of a vector field allocated to a dummy image frame (Tj) located in proximity to the two frames (Ta, Tb).

16. Process according to Claim 15, characterized in that the direction of scan of the lines of the dummy frame is alternated every second line.

17. Process according to Claims 15 and 16, characterized in that it consists in estimating the motion of each pixel in the dummy frame (Tj) in the form of a motion vector (D(z,Tj) corresponding to the displacement of the pixel P(z,Tj) between the frames at instants Ta and Tb, this vector passing through the current point P(z,Tj) and having its ends on the image frames of instants Ta and Tb respectively, estimation taking place by performing an iterative calculation of displacement vectors $D_i(z,Tj)$ by a gradient algorithm which minimizes the square deviation of the local variations in the luminance of the current point in the dummy frame Tj.

18. Process according to Claim 17, characterized in that each displacement $D_i(z,Tj)$ of an iteration i is obtained from the displacement vector $D_{i-1}(z,Tj)$ obtained at the previous iteration i-1 through the relation
$$D_i(z,Tj) = D_{i-1}(z,Tj) - (DFD(z,D_{i-1}).\text{grad } L(z,D_{i-1}))) .2(\text{grad } L(z,D_{i-1})^2)^{-1}$$
where: z denotes the coordinates in space of the current point P(z,Tj) for which the motion vector D(z,Tj) is estimated
- $DFD(z,D_{i-1})$ denotes the displaced inter-frame difference calculated between the frames at instants Ta and Tb
- and grad $L(z,D_{i-1})$ denotes the half-sum spatial gradient of the spatial gradients at the ends of the displacement vector $D_{i-1}$ over the frames at instants Ta and Tb.

19. Process according to Claim 18, characterized in that the estimation of the motion vector D(z,Tj) for the current point of the pixel P(z,Tj) is calculated from five initializing displacement vectors corresponding to four motion vectors already estimated for four neighbouring points in the causal neighbourhood of the current point and to an initial temporal prediction vector estimated for the current point, the five initializing displacement vectors giving rise to five estimated motion vectors, only that motion vector which among the five estimated ones gives convergence of the gradient algorithm with the smallest inter-frame difference being retained.

20. Process according to either one of Claims 18 and 19, characterized in that the displaced inter-frame difference $DFD(z,D_{i-1})$ is obtained by effecting the temporal difference in the direction of the displacement $D_{i-1}$ of the luminance values of the current point P(z,Tj) displaced in the frames at instants Ta and Tb.

21. Process according to Claim 20, characterized in that the luminances LA and LB of the current point displaced respectively in the frames at instants Ta and Tb are obtained by bilinear interpolation of the luminance values In of the 4 pixels surrounding the point, the end of the relevant vector, in Ta and Tb respectively.

22. Process according to any one of Claims 17 to 21, characterized in that each displacement vector $D_i$ is obtained by subtracting from the displacement vector $D_{i-1}$, calculated at the previous iteration, a correction term equal to the product of the displaced inter-frame difference $DFD(z,D_{i-1})$ on the one hand, times the spatial gradient of luminance grad $L(z,D_{i-1})$ and, on the other hand, the inverse of the half-sum of the spatial gradients at the ends of the displacement vector $D_{i-1}$ in the frames at instants Ta and Tb.

23. Device for estimating motion in a sequence of moving images of the television type in which each image is formed by a specified number of light points arranged at the intersections of lines and columns, of the type in which: motion estimation is achieved by executing a gradient algorithm which minimizes the square deviation of the local variations in luminance of the current point of the image from a displaced causal point which is its homologue in the previous image, the initializing (7, 21) of the algorithm takes place on the basis of displacement vectors estimated in several directions inside the near causal neighbourhood of the current point and each estimation is propagated in the direction of scan of the lines of the image, characterized in that it comprises: a line memory (32) coupled to an image frame memory (33) for storing respectively the luminance values of a specified number of points of the image surrounding the homologues of the current point P(z,Tj) and of the points surrounding it in the frames at instants Ta and Tb, a displacement estimation device (38) coupled to the line memory (32), to the image frame memory (33) and to a decision module (36, 37) for calculating, from the luminance values of the points contained in the line memory and the frame memory and from at least one initial displacement value contained in an initializing block (39), a displacement vector for each current point P(z,Tj) of the image.

24. Device according to Claim 23, characterized in that the displacement estimation device comprises at least one convergence testing block (44, 49, 54, 59, 64) a correction term calculation block (45, 50, 55, 60, 65) and a new-displacement calculation block (47, 52, 57, 62, 67).

25. Device according to Claim 24, characterized in that a convergence testing block comprises, on the one hand, a first interpolation circuit (70) determining the luminance of the current point displaced in the frame at instant Ta, a second interpolation circuit (17 bis) for determining the luminance of the current point displaced in the frame Tb and a calculating device (71) coupled to the first and to the second interpolation circuit (70) and (70 bis) for calculating as a function of the luminance values calculated by the first (70) and the second (70 bis) interpolation circuit the absolute value of the displaced inter-image difference, the output of the calculating device (71) being coupled to the decision module (36) across a first (72) and a second (73) switch; on the other hand, a first and a second device (74, 74 bis) for calculating the gradient coupled to a third calculating device (75) for calculating the mean of the gradients formed by the first and the second calculating device, the third calculating device (75) being coupled to a fourth calculating device (75 bis) for the sum of the squares of the displaced mean gradients.

26. Device according to Claims 24 and 25, characterized in that a correction terms calculating block comprises a fifth calculating device (76) for a value $\varepsilon$ equal to the inverse divided by two of the sum of the squares of the displaced mean gradients provided by the fourth calculating device (75 bis) coupled across an increment calculating device (77) to a correction calculating device (78) coupled, on the one hand, to the third calculating device (75) and, on the other hand, to the second switch (73) for calculating correction terms as a function of the absolute value of the displaced interimage difference provided by the calculating device (71) and of the value $\varepsilon$, as well as at least one comparator circuit (79, 80) for limiting the value of the correction terms obtained from the correction calculating device (78).

27. Device according to Claim 26, characterized in that a new-displacements calculating block comprises subtractor circuits (81, 82) for subtracting the correction terms at each new iteration instructed by the increment calculating device (77), from the value of the displacement calculated at the previous iteration and arrayed in the initializing block (39), in order to obtain the new displacement values at each new iteration and array them in the initializing block (39).

28. Device according to any one of Claims 7 to 14, on the one hand, and 23 to 27, on the other hand, characterized in that the initializing block (39) is coupled to a temporal prediction device (42) allowing calculation of the point of impact in the frame following the current frame and the pixel nearest to this point of impact, by associating the motion vector of the current point with this point.

29. Process for estimating motion in a sequence of moving images according to any one of Claims 1 to 6 and 15 to 22, characterized in that it consists in calculating, in a single iteration and for each estimated displacement vector $D_{pj}$, a value $DFD(D_{pj})$ of displaced inter-image difference between the luminance of the current point and its luminance value in the previous frame shifted by the distance $D_{pj}$, in comparing (101) the absolute values of the DFD values obtained in order to select the estimated displacement vector $D_{pj}$ which corresponds to the smallest absolute value of $DFD(D_{pj})$, and in calculating (102 ... 107) the current displacement vector $D_j$ by executing the gradient algorithm on the basis of the spatial gradient of the selected displacement vector and of the corresponding value $DFD(D_{pj})$.

30. Process according to Claim 29, characterized in that the spatial gradient of the current point is calculated taking only the four points nearest to each end point of the displacement vector into account.

31. Process according to Claim 30, characterized in that the gradient of each end point of the displacement vector is calculated, by measuring over each line situated in proximity to either side of the end point of the displacement vector, the difference of the values of the luminances ($L_1$, $L_2$, $L_3$, $L_4$) of the two points on each line adjacent to the end point of the displacement vector by taking the mean of the luminance differences obtained over each line.

32. Process according to Claim 31, characterized in that the gradient of each end point of the displacement vector is calculated in the direction of vertical scanning of the image by measuring, over each column situated in proximity to and on either side of the end point of the displacement vector, the difference of the values of the luminances ($L_1$, $L_2$, $L_3$, $L_4$) of the two points on each column adjacent to the end point of the displacement vector by taking the mean of the differences of the luminances obtained over each column.

33. Process according to any one of Claims 29 to 32, characterized in that it consists in subjecting each image pair over which the motion is estimated to a rotation by a quarter revolution.

34. Process according to any one of Claims 29 to 33, characterized in that it consists, in order to fill in the existing holes in the field for predicting the motion after temporal projection, in considering for each current hole, the vectors if they exist of the four pixels surrounding it and in defining the motion vector as the mean of the components of the existing vectors.

35. Process according to Claim 34, characterized in that it consists in order to define a vector associated with a hole, in selecting the vector which minimizes the absolute value of the displaced inter-image difference DFD for the current hole pixel.

36. Process according to Claim 34, characterized in that it consists in selecting the vector nearest to the mean of the existing vectors.

37. Process according to any one of Claims 29 to 36, characterized in that it consists in defining several temporal predictors for each point of the current image by filterings by means of a bank of filters of the field of motion arising from the temporal projection.

38. Process according to any one of Claims 29 to 37, characterized in that it consists in performing a spatial filtering of the field of motion before temporal projection so as to define each new prediction field.

FIG.1a

FIG.1b

# FIG.2

IMAGE COURANTE
IMS(t)

1 — DETERMINATION
DU BALAYAGE

IMS t-1

7 — INITIALISATION
4 DEPLACEMENTS
DANS LE VOISI-
NAGE CAUSAL

2 — CALCUL DU GRA-
DIENT [grad I(z,t)]

3 — NON [grad I(z,t)]>Sg OUI

5 — ESTIMATION DE 4
NOUVEAUX DEPLA-
CEMENTS

4 — ORGANE DE DECI-
SION CHOIX D'UN
DEPLACEMENT
DANS LE VOISINAGE
CAUSAL

6 — ORGANE DE DECI-
SION CHOIX D'UN
DEPLACEMENT
PARMI LES 4
ESTIMES

8 — CHAMP DE
DEPLACEMENTS

PASSAGE A
L'IMAGE SUIVANTE

32

# FIG.3

DC          FC

DL

DXMAX

DYMAX

FL

IMS(t-T)          IMS(t)

# FIG.4a

# FIG.4b

COLONNES

(k-1)   k   (k+1)

$D_0^C$        $D_0^B$      $D_0^D$

Ligne (l-1) — C   B   D —

Ligne  l       A   P(Z,t)

$D_0^A$

# FIG.4c

(k-1)   k   (k+1)

$D_0^D$   $D_0^B$   $D_0^C$

— D   B   C —   (l-1)

P(Z,t)   A   l

$D_0^A$

O — X

I(k-1,l)    I(k,l-1)

Ligne impaire    I(k,l)    I(k,l-1)

Ligne paire    I(k,l)    I(k+1,l)

Y

# FIG.5

O — X

# FIG.6

IMS(t-1)

$I_1$    $I_2$    $I_3$

$I_B$    FDX

FDY    $I_4$    $D_y$

$I_6$    $I_5$

$I_7$    $I_8$    $I_9$    (Z,t-1)

$D_x$

Y

# FIG.7

DX MAX

X    DY MAX

X

Y    P    (Z,t-1)    Y    P    (Z,t)

IMS (t-1)    IMS (t)

# FIG.8

DFD(D$\overset{A}{i}$)≤DFD(D$\overset{a}{i}$)
et DFD(D$\overset{A}{i}$)≤DFD(D$\overset{c}{i}$) et
DFD(D$\overset{A}{i}$) DFD(D$\overset{p}{i}$)

9

NON

OUI

DFD(D$\overset{a}{i}$)≤DFD(D$\overset{c}{i}$)
et DFD(D$\overset{a}{i}$)≤DFD(D$\overset{p}{i}$)

11

NON

OUI

DFD (D$\overset{c}{i}$)≤DFD(D$\overset{p}{i}$)

13

OUI

NON

D= D$\overset{A}{i}$
DFD=DFD(D$\overset{A}{i}$)

10

D= D$\overset{a}{i}$
DFD=DFD(D$\overset{a}{i}$)

12

D= D$\overset{c}{i}$
DFD=DFD(D$\overset{c}{i}$)

14

D= D$\overset{p}{i}$
DFD=DFD(D$\overset{p}{i}$)

15

DFD ≤ S

16

NON

OUI

D = 0

17

D

# FIG.9

Ta

Tj

(Z,Ta)

Tb

D(Z,Tj)

temps

(Z,Tj)

$(Z-\dfrac{Tj-Ta}{Tb-Ta} \times D,Ta)$

$(Z+\dfrac{Tb-Tj}{Tb-Ta} \times D,Tb)$

(Z,Tb)

35

Trame courante Tj

**FIG.10**

DETERMINATION DU BALAYAGE — 18

INITIALISATION 4 DEPLACEMENTS DANS LE VOISINAGE CAUSAL — 21

Ta Tb

ESTIMATION DE 4 NOUVEAUX DEPLACEMENTS — 19

ORGANE DE DECISION CHOIX D'UN DEPLACEMENT PARMI LES 4 ESTIMES — 20

CHAMP DE DEPLACEMENTS — 21

PASSAGE A L'IMAGE SUIVANTE

# FIG.11

# FIG.12

# FIG.13a

# FIG.13b

# FIG.13c

# FIG.13d

# FIG.13e

# FIG.13f

FIG.14

FIG.15a

FIG.16

FIG.15b

FIG.19

38

MEMOIRE DES MOUVEMENTS
DE Tj-1 ( ou Tb )
~ 23

PROLONGEMENT DES VECTEURS
MOUVEMENT ET CREATION
DES POINTS D'IMPACT
~ 24

ATTRIBUTION DES MOUVE-
MENTS AUX PIXELS LES
PLUS PROCHES DES POINTS
D'IMPACT        +
TRAITEMENT DES CONFLITS
~ 25

TRAITEMENT DES TROUS
~ 26

CHAMP DE MOUVEMENT
DE PREDICTION TEMPORELLE
POUR LA TRAME Tj ( ou Tc )
~ 27

# FIG.17

Trame courante Tj

Champ de mouvement estimé
précédent pour la trame Tj−1

18 — DETERMINATION
DU BALAYAGE

PREDICTION TEMPOREL-
LE DU MOUVEMENT
28

Tc    Tb

INITIALISATION 5
DEPLACEMENTS
DANS LE VOISINAGE
CAUSAL
21

ESTIMATION DE
5 NOUVEAUX
DEPLACEMENTS — 19

ORGANE DE DECISION
CHOIX D'UN
DEPLACEMENT PARMI
LES 5 ESTIMES — 20

CHAMP DE
DEPLACEMENTS — 22

FIG.18

PASSAGE A
L'IMAGE SUIVANTE

Champ de mouvement estimé
précédent pour la trame Tb

FIG.20

# FIG.21

FIG. 22

# FIG.23

ORGANE DE DECISION

FIG.24

# FIG.25

FIG.26

EP 0 360 698 B1

FIG.27

## FIG_28

Dpj

CALCUL DFD (Dpj) 100

SELECTION DU VECTEUR Dpj QUI REND |DFD| MINIMAL 101

CALCUL DU GRADIENT SPATIAL 102

CALCUL DE LA FONCTION DE CORRECTION 103

CALCUL DU NOUVEAU VECTEUR Dj 104

$-D_{MAX} \leqslant Dj \leqslant D_{MAX}$ 105

106

NON

Dj = Dpj 107

OUI

FIN

## FIG_29

$L_1$     $L_2$

$L_3$     $L_4$

$D_{pj}$

## FIG_30

## FIG_31

## FIG_32

## FIG_33

## FIG_34

## FIG_35

CHAMP DE MOUVEMENT PROJETE 110

108

FILTRE

FILTRE 109

49